# EUROPEAN PATENT APPLICATION

(11) **EP 4 683 239 A1**
(43) Date of publication of application: **21.01.2026**
(21) Application number: 24771175.7
(22) Date of filing: 12.03.2024
(51) Int. Cl.: H04B 7/06, H04B 7/08, H04W 72/02, H04W 72/04, H04W 72/25, H04W 24/08, H04W 92/18, H04B 17/318

(54) **METHOD AND DEVICE FOR BEAM PAIRING DURING ESTABLISHMENT OF INTER-TERMINAL COMMUNICATION LINK**

(30) Priority: 14.03.2023 KR 20230033534; 23.03.2023 KR 20230038126; 24.03.2023 KR 20230038889; 28.03.2023 KR 20230040635; 04.04.2023 US 202363457109 P; 06.04.2023 KR 20230045635; 04.05.2023 KR 20230058524; 09.05.2023 KR 20230060017; 09.05.2023 KR 20230060030; 19.05.2023 KR 20230065030
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Jung, Minkyu
(86) International application number: PCT/KR2024/003188
(87) International publication number: WO 2024/191176

(57) **Abstract**

An operating method of a first device (100) in a wireless communication system is presented. The method may comprise the steps of: transmitting, to a second device (200), information related to a first time period for first monitoring of a first inter-terminal physical channel transmission; and performing the first monitoring on the basis of a first reception spatial configuration related to the second device (200) in the first time period.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |

### DISCLOSURE

### TECHNICAL SOLUTION

According to an embodiment of the present disclosure, a method for performing, by a first device, wireless communication may be proposed. For example, the method may comprise: transmitting, to a second device, information related to a first time interval for first monitoring for a first inter-user equipment, inter-UE, physical channel transmission; and performing the first monitoring based on a first reception spatial setting related to the second device within the first time interval.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: transmitting, to a second device, information related to a first time interval for first monitoring for a first inter-user equipment, inter-UE, physical channel transmission; and performing the first monitoring based on a first reception spatial setting related to the second device within the first time interval.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: transmitting, to a second UE, information related to a first time interval for first monitoring for a first inter- UE physical channel transmission; and performing the first monitoring based on a first reception spatial setting related to the second UE within the first time interval.

According to an embodiment of the present disclosure, a non-transitory computer-readable storage medium storing instructions may be proposed. For example, the instructions, based on being executed, may cause a first device to: transmit, to a second device, information related to a first time interval for first monitoring for a first inter-user equipment, inter-UE, physical channel transmission; and perform the first monitoring based on a first reception spatial setting related to the second device within the first time interval.

According to an embodiment of the present disclosure, a method for performing, by a second device, wireless communication may be proposed. For example, the method may comprise: receiving, from a first device, information related to a first time interval for performing a first inter-user equipment, inter-UE, physical channel transmission; and performing, to the first device, the first inter-UE physical channel transmission based on a first transmission spatial setting within the first time interval, wherein a monitoring for the first inter-UE physical channel transmission may be performed based on a first reception spatial setting related to the second device within the first time interval.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, information related to a first time interval for performing a first inter-user equipment, inter-UE, physical channel transmission; and performing, to the first device, the first inter-UE physical channel transmission based on a first transmission spatial setting within the first time interval, wherein a monitoring for the first inter-UE physical channel transmission may be performed based on a first reception spatial setting related to the second device within the first time interval.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a procedure in which a UE performing a reception operation using a spatial filter transmits time interval information to another UE and performs monitoring, according to an embodiment of the present disclosure.
FIG. 10 shows a procedure in which a UE performing a reception operation using a spatial filter transmits time interval information to a peer UE and performs monitoring, according to an embodiment of the present disclosure.
FIG. 11 shows a procedure for a first device to perform wireless communication, according to one embodiment of the present disclosure.
FIG. 12 shows a procedure for a second device to perform wireless communication, according to one embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

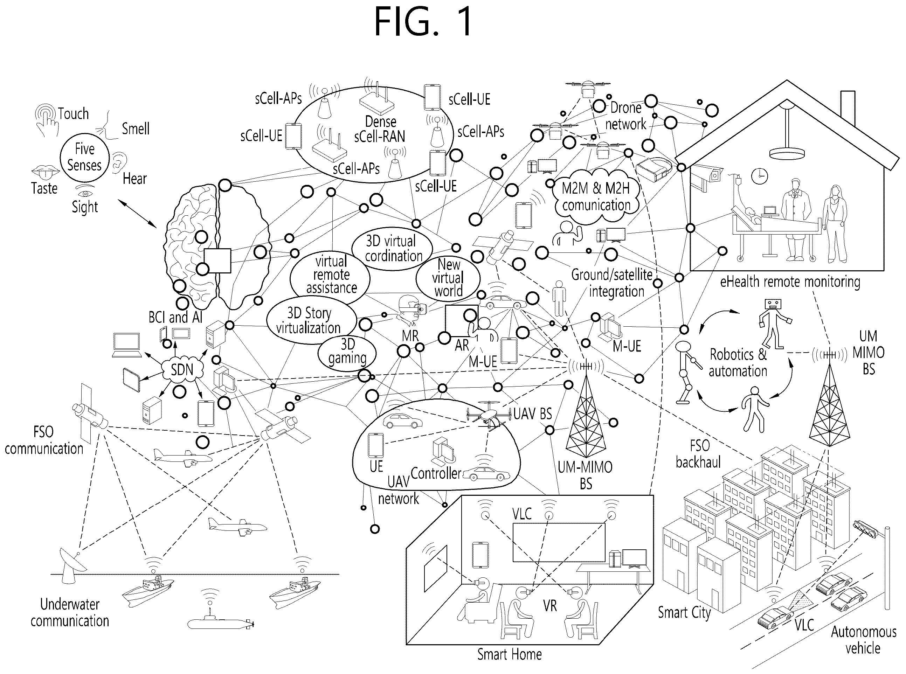

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

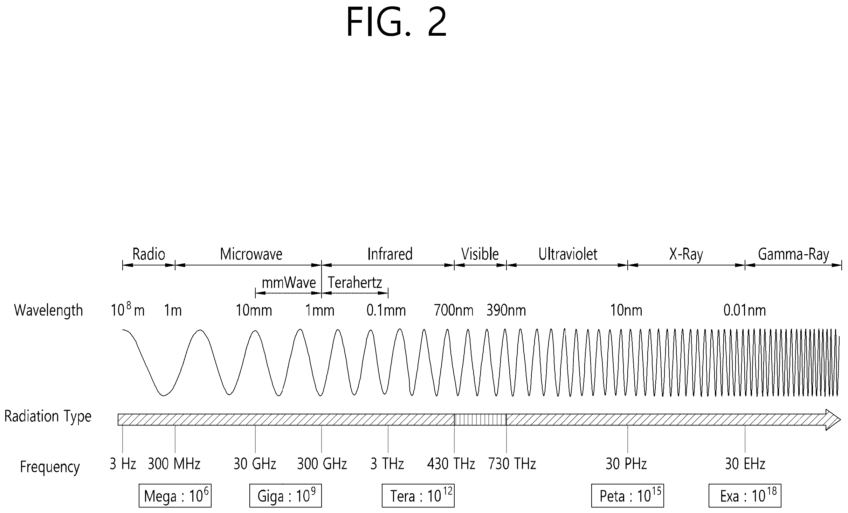

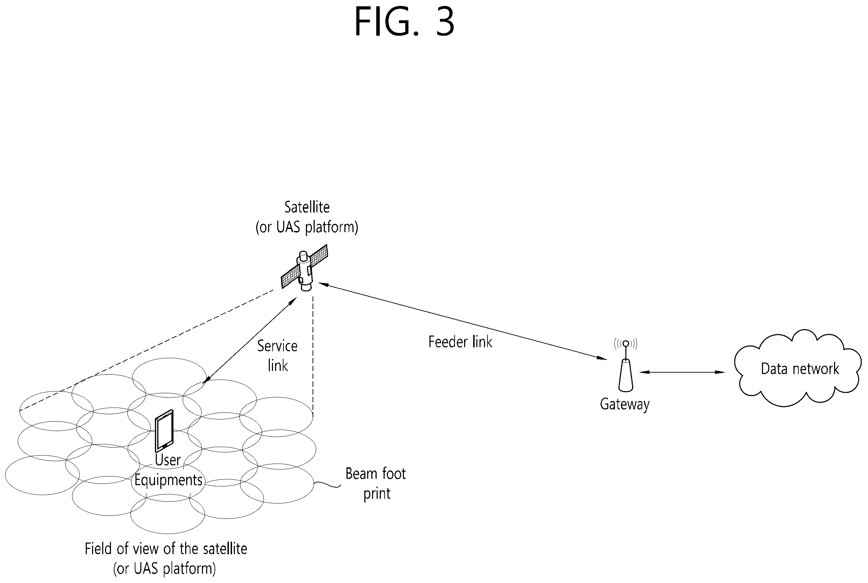

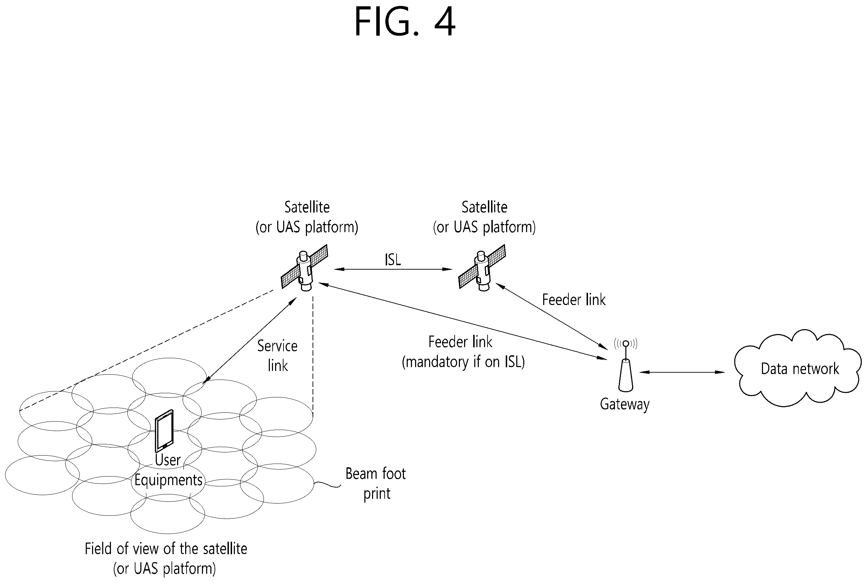

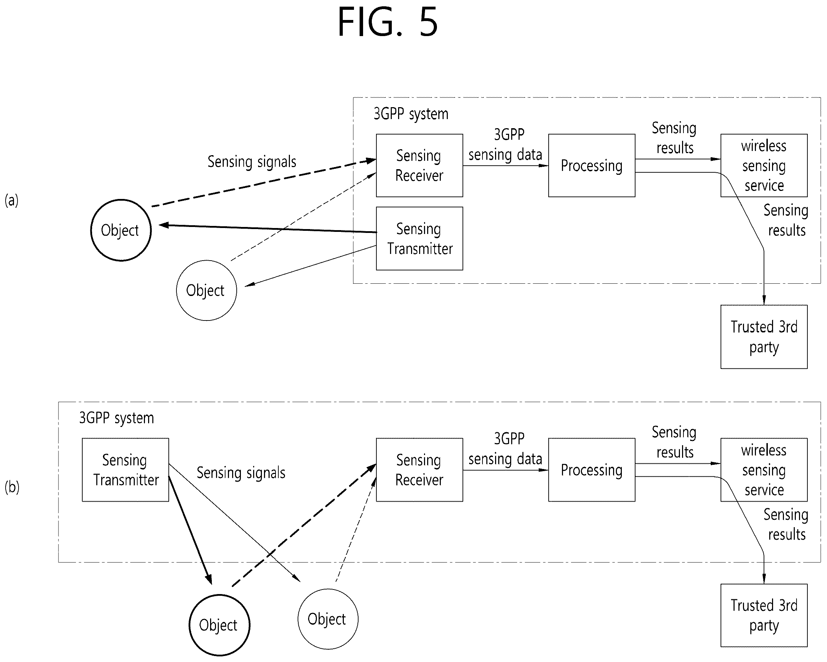

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC _INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

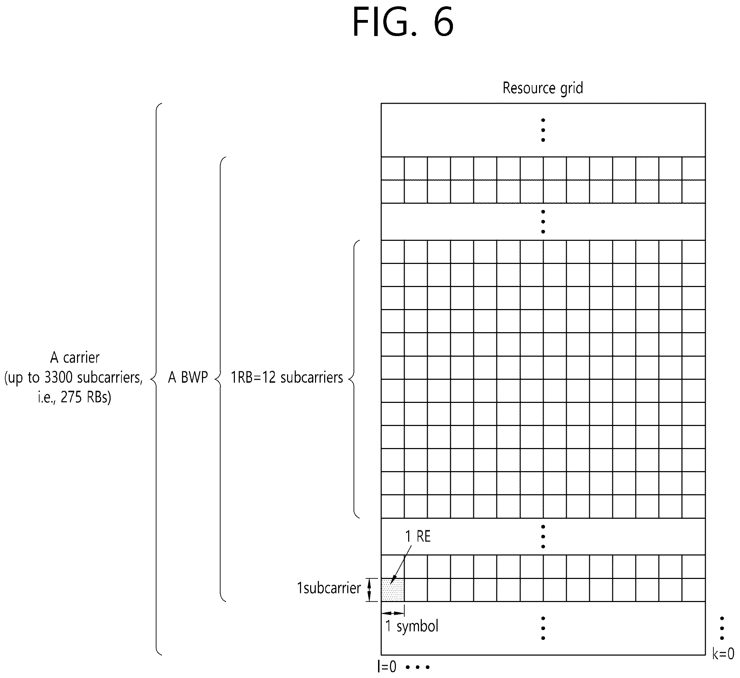

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

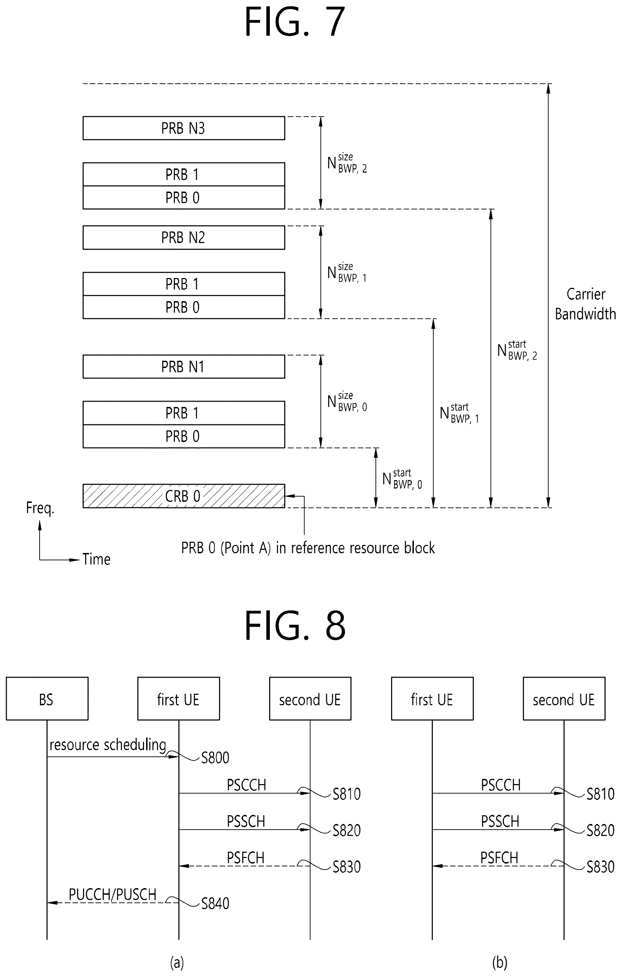

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

On the other hand, in inter-UE communication (e.g., sidelink communication; SL communication), a UE may perform transmission (and/or, reception) based on multiple panels and/or beam directions, in which case it may be needed to define a method for managing a spatial setting, including information related to the beams or information for a spatial domain transmission/reception filter or the like.

On the other hand, in the case of base station-to-UE communication (e.g., downlink communication; DL communication), a base station may indicate to a UE the antenna port quasi-co-location (QCL) information via a transmission configuration indicator (e.g., transmission configuration indicator; TCI), and, in particular, when a base station-to-UE (e.g., DL) signal is received via 'typeD', the base station may configure/indicate whether the UE should assume that the spatial reception parameter or beam information is the same as a particular SSB or channel state information reference signal (e.g., CSI-RS).

On the other hand, for UE-to-base station communication (e.g., uplink communication; UL communication), a base station may configure/indicate a spatial setting or spatial domain transmission filter of a UE for physical upward shared channel (e.g., PUSCH) transmission to follow a specific SRS transmission resource of the UE, a physical random access channel (e.g., PRACH) transmission, and/or a spatial setting for base station-to-UE signal (e.g., DL) reception.

On the one hand, for base station-to-UE communication (e.g., DL communication), a beam management and/or beam recovery operation may be performed based on a specific candidate beam reference signal (RS) and a random access procedure including transmission of a physical random access channel. On the other hand, in the case of an inter-UE communication (e.g., SL communication), since no such channel type as a physical random access channel exists, it may be required to use a different inter-UE communication (e.g., SL communication) channel/signal type for the beam management and/or beam recovery procedure.

For example, for beam management and/or beam compensation procedures in base station-to-UE communication (e.g., DL communication), a UE may measure a reference signal received power (e.g., reference signal received power (RSRP)) for a candidate beam reference signal, and may transmit to a base station a physical random access channel preamble for a specific candidate beam reference signal based on the reference signal received power (e.g., RSRP) measurement value.

For example, after transmitting one or more physical random access channels using different transmission spatial settings, a UE may receive from a base station a physical base station-to-UE control channel (e.g., PDCCH) scrambled with a cell radio network temporary identifier (e.g., C-RNTI) within a random access response (RAR) window, in which case the UE may determine that the random access procedure for beam failure recovery has been successfully completed.

For example, a beam management scheme and/or a beam training scheme may differ for a case where target user information is included in a direct communication request (DCR) and for a case where it is not included.

For example, when target user information is included in a direct communication request (e.g., DCR), and/or when beam-related information from previous communication with a UE according to the target user information exists, the UE may perform (initial) beam pairing and/or beam management operation based on a candidate reference signal that is (pre-)configured and/or configured by PC5-RRC previously.

For example, for a case where target user information is included in a direct communication request (e.g., DCR) and for a case where target user information is not included, a candidate reference signal, a candidate transmission, a reception spatial setting, a beam failure detection reference signal, whether beam sweeping is performed, an interval length, and/or a pattern may differ, may be independently (pre-)configured, and/or may be configured by PC5-RRC.

For example, for a case where a direct communication request (e.g., DCR) is transmitted in a broadcast form or for a case where it is transmitted in a unicast form, whether beam management is performed/a beam management scheme, and/or whether beam training is performed/a beam training scheme may differ.

For example, when transmitting a direct communication request (e.g., DCR), a UE may provide information related to a candidate reference signal and/or a beam failure detection reference signal together. For example, the information for the candidate reference signal and/or the beam failure detection reference signal may be updated later through PC5-RRC.

According to an embodiment of the present disclosure, a UE may transmit a direct communication request (e.g., DCR) multiple times, and/or an inter-UE channel (e.g., SL channel) transmission corresponding to each direct communication request (e.g., DCR) may correspond to a different transmission or reception spatial setting. For example, for each transmission time point of an inter-UE channel (e.g., SL channel) transmission corresponding to each direct communication request (e.g., DCR), and/or for each different transmission/reception spatial setting, a corresponding response reception time point and/or a response window may be configured.

For example, the response reception time point and/or the response window may be determined based on a transmission time point of an inter-UE channel (e.g., SL channel) transmission corresponding to the direct communication request (e.g., DCR), a (pre-)configured window size, a time domain offset value, and/or a window size and/or a time domain offset value indicated by the UE transmitting the direct communication request (e.g., DCR).

For example, the response reception time point and/or the response window may be determined within a specific window (time interval) starting after a transmission time point of an inter-UE channel (e.g., SL channel) transmission corresponding to the direct communication request (e.g., DCR) or starting after a specific time point.

For example, a UE that has transmitted a direct communication request (e.g., DCR) may expect to receive a response for the direct communication request (e.g., DCR) (for example, a security establishment message and/or a direct communication accept message (e.g., DCA)) within a response reception time point and/or a response window for each transmission time point of the direct communication request (e.g., DCR), and/or may determine a reception spatial setting within the response time point and/or the response window based on a transmission spatial setting at the transmission time point of the direct communication request (e.g., DCR).

According to an embodiment of the present disclosure, a time point at which a UE that has received a direct communication request (e.g., DCR) transmits a response message back to a UE that has transmitted the direct communication request (e.g., DCR) may be located within a response time point and/or a response window related to the direct communication request (e.g., DCR) to be responded to.

For example, the response-target direct communication request (e.g., DCR) may correspond to a case where a beam quantity (or a measurement value related to the beam) for the direct communication request (e.g., DCR) is greater than or equal to a certain level or is greater than a certain level, and/or may correspond to N inter-UE channel (e.g., SL channel) receptions for the same direct communication request (e.g., DCR), where the beam quantity (or the measurement value related to the beam) or quality is the highest. For example, the N may be 1, may be a value determined by a UE, may be a (pre-)configured value, or may be a value indicated along with the direct communication request (e.g., DCR).

Alternatively, for example, among the direct communication requests (e.g., DCRs), for a case where a beam quantity (or a measurement value related to the beam) related to a direct communication request (e.g., DCR) by a UE is greater than or equal to a certain level or is greater than a certain level, and/or N inter-UE channel (e.g., SL channel) receptions for the same direct communication request (e.g., DCR), in which the beam quantity (or the measurement value related to the beam) or quality is the highest, may correspond to the response target. For example, the N may be 1, may be a value determined by a UE, may be a (pre-)configured value, or may be a value indicated along with the direct communication request (e.g., DCR).

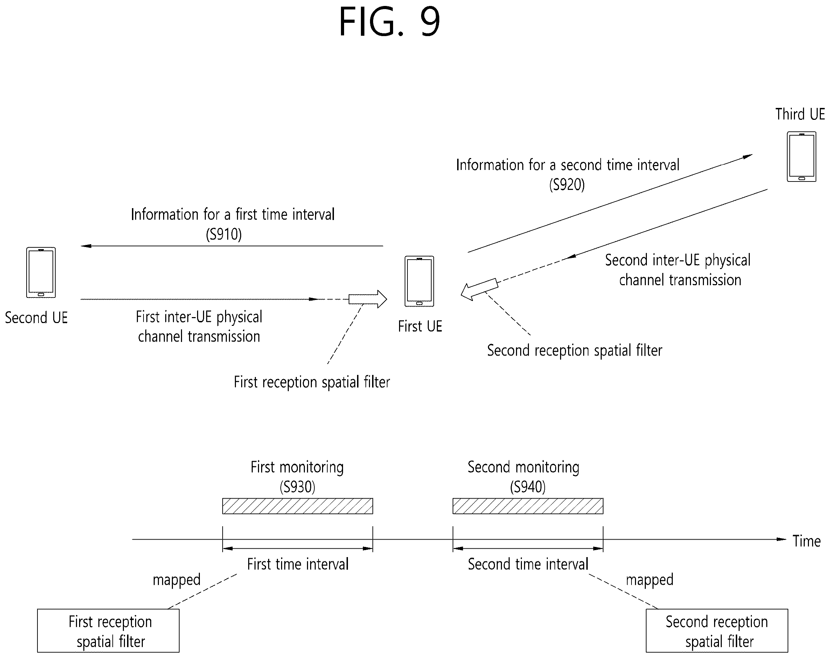

FIG. 9 shows a procedure in which a UE performing a reception operation using a spatial filter transmits time interval information to another UE and performs monitoring, according to an embodiment of the present disclosure. The embodiment of FIG. 9 may be combined with various embodiments of the present disclosure.

Referring to FIG. 9, a first UE, a second UE, and a third UE are shown. In step S910, the first UE may transmit information for a first time interval to the second UE. For example, the information for the first time interval may be transmitted along with a third inter-UE physical channel (e.g., PSCCH/PSSCH) transmission. For example, the third inter-UE physical channel (e.g., PSCCH/PSSCH) transmission may be a direct communication request (e.g., DCR). For example, the first time interval may be a time interval in which the first UE performs first monitoring to receive a transmission performed by the second UE.

Subsequently, for example, the second UE may perform a first inter-UE physical channel transmission to the first UE within the first time interval in response to the information for the first time interval. For example, the first inter-UE physical channel transmission may be performed based on a first transmission spatial filter.

Similarly, in step S920, the first UE may transmit information for a second time interval to the third UE. For example, the information for the second time interval may be transmitted along with a fourth inter-UE physical channel (e.g., PSCCH/PSSCH) transmission. For example, the fourth inter-UE physical channel (e.g., PSCCH/PSSCH) transmission may be a direct communication request (e.g., DCR). For example, the second time interval may be a time interval within which the first UE performs second monitoring to receive a transmission performed by the third UE.

Subsequently, for example, the third UE may perform a second inter-UE physical channel transmission to the first UE within the second time interval in response to the information for the second time interval. For example, the second inter-UE physical channel transmission may be performed based on a second transmission spatial filter.

The order of description of steps S910 and S920 above may be irrelevant to an order in which operations of the respective steps are performed.

In step S930, the first UE may perform first monitoring within the first time interval. That is, the first UE may perform monitoring to receive the first inter-UE physical channel transmission to be transmitted by the second UE within the first time interval. At this time, the first UE may perform the first monitoring based on a first reception spatial filter. Herein, the first monitoring may be a reception spatial setting mapped to the first reception interval. That is, the monitoring performed within the first time interval may be performed based on the first reception spatial setting.

For example, the first reception spatial setting may be a reception spatial setting that is internally stored (managed) in the first UE as a reception spatial setting related to (mapped to) the second UE. For example, when a transmission beam based on the first transmission spatial setting is covered by a reception beam based on the first reception spatial setting, the first inter-UE physical channel transmission may be successfully received by the first UE through the first monitoring. For example, when information for the first time interval is transmitted along with a third inter-UE physical channel (e.g., PSCCH/PSSCH) transmission and the third inter-UE physical channel (e.g., PSCCH/PSSCH) transmission is a direct communication request (e.g., DCR), the first inter-UE physical channel transmission may be a direct communication accept (e.g., DCA).

Similarly, in step S940, the first UE may perform second monitoring within the second time interval. That is, the first UE may perform monitoring to receive the second inter-UE physical channel transmission to be transmitted by the third UE within the second time interval. At this time, the first UE may perform the second monitoring based on a second reception spatial filter. Herein, the second monitoring may be a reception spatial setting mapped to the second reception interval. That is, the monitoring performed within the second time interval may be performed based on the second reception spatial setting.

For example, the second reception spatial setting may be a reception spatial setting that is internally stored (managed) in the first UE as a reception spatial setting related to (mapped to) the third UE. For example, when a transmission beam based on the second transmission spatial setting is covered by a reception beam based on the second reception spatial setting, the second inter-UE physical channel transmission may be successfully received by the second UE through the second monitoring. For example, when information for the second time interval is transmitted along with a fourth inter-UE physical channel (e.g., PSCCH/PSSCH) transmission and the fourth inter-UE physical channel (e.g., PSCCH/PSSCH) transmission is a direct communication request (e.g., DCR), the second inter-UE physical channel transmission may be a direct communication accept (e.g., DCA).

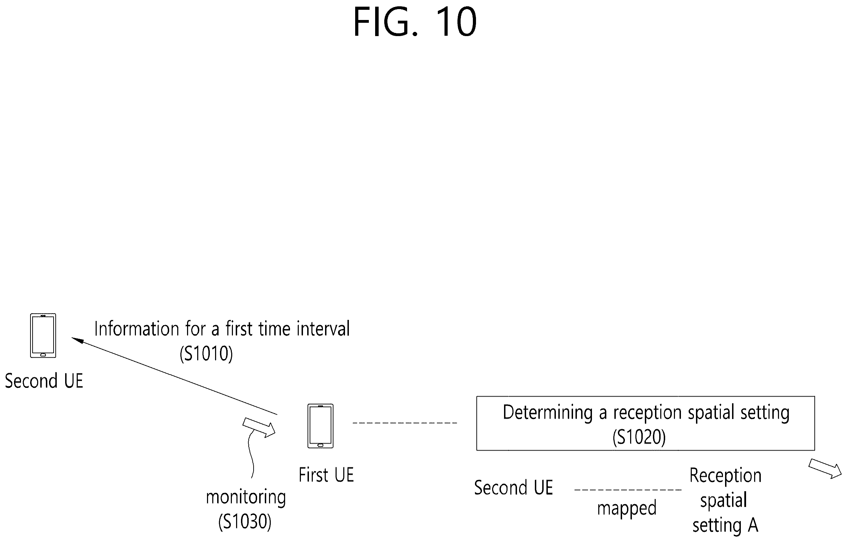

FIG. 10 shows a procedure in which a UE performing a reception operation using a spatial filter transmits time interval information to a peer UE and performs monitoring, according to an embodiment of the present disclosure. The embodiment of FIG. 10 may be combined with various embodiments of the present disclosure.

Referring to FIG. 10, a first UE and a second UE are shown. In step S1010, the first UE may transmit information for a first time interval to the second UE. For example, the information for the first time interval may be transmitted along with a second inter-UE physical channel (e.g., PSCCH/PSSCH) transmission. For example, the second inter-UE physical channel (e.g., PSCCH/PSSCH) transmission may be a direct communication request (e.g., DCR). For example, the first time interval may be a time interval within which the first UE performs monitoring to receive a transmission performed by the second UE.

In step S1020, the first UE may determine reception spatial setting A as a reception spatial setting for monitoring to be performed within the first time interval to perform a first inter-UE physical channel (e.g., PSCCH/PSSCH) transmission to be performed by the second UE. For example, the first UE may internally manage a reception spatial setting related to (mapped to) the second UE. For example, the reception spatial setting related to (mapped to) the second UE may be the reception spatial setting A. For example, the reception spatial setting A may be a reception spatial setting managed inside the first UE based on inter-UE communication (e.g., SL communication) previously performed between the first UE and the second UE.

In step S1030, the first UE may perform monitoring within the first time interval. That is, the first UE may perform monitoring to receive the first inter-UE physical channel transmission to be transmitted by the second UE within the first time interval. At this time, the first UE may perform the monitoring based on reception spatial filter A.

For example, when a transmission beam based on a transmission spatial setting related to a transmission performed by the second UE is covered by a reception beam based on reception spatial setting A, the first inter-UE physical channel transmission may be successfully received by the first UE through the monitoring.

According to an embodiment of the present disclosure, when a UE receives a direct communication request (e.g., DCR), the UE may transmit a direct communication accept (e.g., DCA) to the UE that has transmitted the direct communication request (e.g., DCR).

According to an embodiment of the present disclosure, when a UE corresponds to a target user indicated in a direct communication request (e.g., DCR), the UE may transmit a direct communication accept (e.g., DCA) to the UE that has transmitted the direct communication request (e.g., DCR).

According to an embodiment of the present disclosure, when a UE is interested in service type(s) indicated in a direct communication request (e.g., DCR), the UE may transmit a direct communication accept (e.g., DCA) to the UE that has transmitted the direct communication request (e.g., DCR).

According to an embodiment of the present disclosure, when a quantity (or a related measurement value) for an inter-UE physical control channel demodulation reference signal (e.g., PSCCH DMRS), an inter-UE physical shared channel demodulation reference signal (e.g., PSSCH DMRS), and/or an inter-UE channel state information reference signal (e.g., SL CSI-RS) of an inter-UE channel (e.g., SL channel) related to a direct communication request (e.g., DCR) is greater than or equal to a certain level or is greater than a certain level, the UE may transmit a direct communication accept (e.g., DCA) to the UE that has transmitted the direct communication request (e.g., DCR).

For example, the quantity (or a related measurement value) mentioned above may include reference signal received power (e.g., RSRP), reference signal received quality (e.g., RSRQ), and/or signal-to-interference ratio (e.g., SINR).

According to an embodiment of the present disclosure, when a UE receives a direct communication request (e.g., DCR), the UE may perform an operation for security establishment with the UE that has transmitted the direct communication request (e.g., DCR).

According to an embodiment of the present disclosure, when a UE corresponds to a target user indicated in a direct communication request (e.g., DCR), the UE may perform an operation for security establishment with the UE that has transmitted the direct communication request (e.g., DCR).

According to an embodiment of the present disclosure, when a UE is interested in service type(s) indicated in a direct communication request (e.g., DCR), the UE may perform an operation for security establishment with the UE that has transmitted the direct communication request (e.g., DCR).

According to an embodiment of the present disclosure, when a quantity (or a related measurement value) for an inter-UE physical control channel demodulation reference signal (e.g., PSCCH DMRS) and/or an inter-UE physical shared channel demodulation reference signal (e.g., PSSCH DMRS) and/or an inter-UE channel state information reference signal (e.g., SL CSI-RS) of an inter-UE channel (e.g., SL channel) related to a direct communication request (e.g., DCR) is greater than or equal to a certain level or is greater than a certain level, the UE may perform an operation for security establishment with the UE that has transmitted the direct communication request (e.g., DCR).

For example, the quantity (or a related measurement value) mentioned above may include reference signal received power (e.g., RSRP) and/or reference signal received quality (e.g., RSRQ) and/or signal-to-interference ratio (e.g., SINR).

According to an embodiment of the present disclosure, the operation for security establishment may include a Direct Auth and Key Establishment Procedure between UE-1, which is a UE that has transmitted a direct communication request (e.g., DCR), and UE-2, which is a UE that has received the direct communication request (e.g., DCR), and/or a Direct Security Mode Command procedure.

For example, a transmission spatial setting or a reception spatial setting for all or some of signaling for security establishment and for a direct communication accept (e.g., DCA), which UE-2 transmits to UE-1, may be the same.

For example, a transmission spatial setting or a reception spatial setting for all or some of the signaling for security establishment and for a direct communication accept (e.g., DCA), which UE-2 transmits to UE-1, may be the same as or related to a reception spatial setting or a transmission spatial setting for a specific direct communication request (e.g., DCR) received/detected by the UE.

According to an embodiment of the present disclosure, when a UE receives a direct communication request (e.g., DCR), in a situation where beam quality for the direct communication request (e.g., DCR) received from the UE that has transmitted the direct communication request (e.g., DCR) is low, the UE may transmit a request for additional beam training and/or management.

According to an embodiment of the present disclosure, when a UE corresponds to a target user indicated in a direct communication request (e.g., DCR), in a situation where beam quality for the received direct communication request (e.g., DCR) is low, the UE may transmit a request for additional beam training and/or management to the UE that has transmitted the direct communication request (e.g., DCR).

According to an embodiment of the present disclosure, when a UE is interested in service type(s) indicated in a direct communication request (e.g., DCR), in a situation where beam quality for the received direct communication request (e.g., DCR) is low, the UE may transmit a request for additional beam training and/or management to the UE that has transmitted the direct communication request (e.g., DCR).

According to an embodiment of the present disclosure, when a quantity (or a related measurement value) for an inter-UE physical control channel demodulation reference signal (e.g., PSCCH DMRS), an inter-UE physical shared channel demodulation reference signal (e.g., PSSCH DMRS), and/or an inter-UE channel state information reference signal (e.g., SL CSI-RS) of an inter-UE channel (e.g., SL channel) related to a direct communication request (e.g., DCR) is less than or equal to a certain level or is less than a certain level, in a situation where beam quality for the received direct communication request (e.g., DCR) is low, the UE may transmit a request for additional beam training and/or management to the UE that has transmitted the direct communication request (e.g., DCR).

For example, the quantity (or a related measurement value) mentioned above may include reference signal received power (e.g., RSRP) and/or reference signal received quality (e.g., RSRQ) and/or signal-to-interference ratio (e.g., SINR).

According to an embodiment of the present disclosure, a UE transmitting a direct communication accept (e.g., DCA) may report to the UE that has transmitted a direct communication request (e.g., DCR) a quantity (or a related measurement value) related to all or some beams or transmission/reception spatial settings measured when receiving the direct communication request (e.g., DCR). For example, the quantity (or the related measurement value) related to some beams or transmission/reception spatial settings may be limited to a case where the quantity (or the related measurement value) is greater than or equal to a certain level or is greater than a certain level.

For example, reporting of a quantity (or a related measurement value) related to some beams or transmission/reception spatial settings may be limited to a case where the quantity (or the related measurement value) is greater than or equal to a certain level or is greater than a certain level.

For example, the quantity (or a related measurement value) mentioned above may include reference signal received power (e.g., RSRP), reference signal received quality (e.g., RSRQ), and/or signal-to-interference ratio (e.g., SINR), which are measured based on an inter-UE physical control channel demodulation reference signal (e.g., PSCCH DMRS), an inter-UE physical shared channel demodulation reference signal (e.g., PSSCH DMRS), and an inter-UE channel state information reference signal (e.g., SL CSI-RS).

According to an embodiment of the present disclosure, a UE transmitting signaling for security establishment may report to the UE that has transmitted a direct communication request (e.g., DCR) a quantity (or a related measurement value) related to all or some beams or transmission/reception spatial settings measured when receiving the direct communication request (e.g., DCR). For example, the quantity (or the related measurement value) related to some beams or transmission/reception spatial settings may be limited to a case where the quantity (or the related measurement value) is greater than or equal to a certain level or is greater than a certain level.

For example, reporting of a quantity (or a related measurement value) related to some beams or transmission/reception spatial settings may be limited to a case where the quantity (or the related measurement value) is greater than or equal to a certain level or is greater than a certain level.

For example, the quantity (or a related measurement value) mentioned above may include reference signal received power (e.g., RSRP), reference signal received quality (e.g., RSRQ), and/or signal-to-interference ratio (e.g., SINR), which are measured based on an inter-UE physical control channel demodulation reference signal (e.g., PSCCH DMRS), an inter-UE physical shared channel demodulation reference signal (e.g., PSSCH DMRS), and an inter-UE channel state information reference signal (e.g., SL CSI-RS).

According to an embodiment of the present disclosure, a (destination) ID for PC5 unicast link establishment may differ depending on transmission of a direct communication request (e.g., DCR) accompanied by beam management/beam training, transmission of a direct communication request (e.g., DCR) not involving a beam training operation, or capability related to beam training.

According to an embodiment of the present disclosure, transmission of a direct communication request (e.g., DCR) accompanied by beam management/beam training, transmission of a direct communication request (e.g., DCR) not involving a beam training operation, or capability related to beam training may be distinguished based on an indicator of first inter-UE control information (e.g., 1st SCI) and/or second inter-UE control information (e.g., 2nd SCI).

For example, when a UE receives transmission of a direct communication request (e.g., DCR) accompanied by beam management/beam training, the UE may transmit information related to a beam together and/or perform a beam management operation when establishing the security and/or transmitting a direct communication accept (e.g., DCA).

According to an embodiment of the present disclosure, when transmitting a direct communication request (e.g., DCR), a UE transmitting the direct communication request (e.g., DCR) may at least transmit all or some of UE capability information of a transmitting UE related to a beam and/or a target receiving UE.

For example, the beam-related UE capability may include the number of beams/spatial settings, beam correspondence information, the number of transmission/reception beams, beam switching timing, and/or the number of reference signal sets (for beam failure detection and/or beam management).

For example, the number may be a maximum number supported by the UE. For example, a UE receiving a direct communication request (e.g., DCR) may determine whether the direct communication request (e.g., DCR) is detected and/or whether to transmit a security establishment and/or a direct communication accept (e.g., DCA) based on UE capability information of a transmitting UE related to a beam and/or a target receiving UE.

According to an embodiment of the present disclosure, when UE capability information of a transmitting UE related to a beam and/or a target receiving UE indicates that a beam training operation is performed and/or is to be performed, among UEs that have received a direct communication request (e.g., DCR), a receiving UE having the capability may perform security establishment with the UE that has transmitted the direct communication request (e.g., DCR) and/or a direct communication accept (e.g., DCA) transmission to the UE.

According to an embodiment of the present disclosure, whether beam-related information exists, information indication, resource indication for an inter-UE channel state information reference signal (e.g., SL CSI-RS), and/or whether transmission exists may be indicated using all or some of reserved bits of inter-UE control information (e.g., SCI) format 1-A (first inter-UE control information (e.g., 1st SCI)).

According to an embodiment of the present disclosure, whether beam-related information exists, information indication, resource indication for an inter-UE channel state information reference signal (e.g., SL CSI-RS), and/or whether transmission exists may be indicated through inter-UE control information (e.g., SCI) format 2-D (second inter-UE control information (e.g., 2nd SCI)), and the inter-UE control information (e.g., SCI) format 2-D may schedule an inter-UE physical shared channel (e.g., PSSCH) for broadcast, groupcast, and/or unicast.

According to an embodiment of the present disclosure, whether beam-related information exists, information indication, resource indication for an inter-UE channel state information reference signal (e.g., SL CSI-RS), and/or whether transmission exists may be indicated using all or some of fields (e.g., a source ID field and/or a destination ID field) of second inter-UE control information (e.g., 2nd SCI) (for example, inter-UE control information (e.g., SCI) format 2-A, 2-B, and/or 2-C).

For example, activation or deactivation for a scheme of reinterpreting some of fields may be indicated through inter-UE control information (e.g., SCI) format 1-A (using all or some of reserved bits).

Various embodiments of the present disclosure may be limited to a case where UEs supporting beam training and UEs not supporting beam training are mixed in the same resource pool.

And/or, for example, according to various embodiments of the present disclosure, for a resource pool in which only UEs supporting beam training exist, in addition to the above scheme, whether beam-related information exists, information indication, resource indication for an inter-UE channel state information reference signal (e.g., SL CSI-RS), and/or whether transmission exists may be performed through a separate field.

In the present disclosure, for convenience of explanation, operations for an inter-UE physical channel (e.g., PSCCH/PSSCH) including a direct communication request (e.g., DCR) message and/or an inter-UE physical channel (e.g., PSCCH/PSSCH) including information such as an inter-UE unicast (e.g., SL unicast) link setup or security setup have been described, however, this is merely one embodiment, and the spirit of the present disclosure may be extended and applied to general inter-UE physical channel (e.g., PSCCH/PSSCH) transmission as well.

According to an embodiment of the present disclosure, whether information related to inter-UE unicast (e.g., SL unicast) link establishment, such as a direct communication request (e.g., DCR), is included in an inter-UE physical channel (e.g., PSCCH/PSSCH) may be indicated through the inter-UE physical channel (e.g., PSCCH/PSSCH).

For example, in an embodiment of the present disclosure, an inter-UE physical channel (e.g., PSCCH/PSSCH) carrying a direct communication request (e.g., DCR) message may be distinguished by an indication value of the inter-UE physical channel (e.g., PSCCH/PSSCH). That is, an inter-UE physical channel (e.g., PSCCH/PSSCH) for beam pairing and/or beam management purposes may be indicated through the inter-UE physical channel (e.g., PSCCH/PSSCH).

Meanwhile, an initial beam pairing operation may be performed before performing inter-UE unicast (e.g., SL unicast) link establishment such as a direct communication request (e.g., DCR), and in this case, transmission of a reference signal for beam pairing may be excessive.

According to an embodiment of the present disclosure, when there is an intention to transmit a direct communication request (e.g., DCR) to a UE, when a direct communication request (e.g., DCR) message is ready, and/or when application information for PC5 unicast communication is provided from a higher layer (e.g., a (V2X) application layer), a reference signal for beam management (e.g., beam pairing) may be transmitted (started).

For example, information for resources of the reference signal, whether transmission exists, transmission spatial setting(s), and/or reception spatial setting(s) for the same may be indicated through an inter-UE physical channel (e.g., PSCCH/PSSCH).

According to an embodiment of the present disclosure, when a sum of reference signal received power (e.g., RSRP) measurement values, reference signal received quality (e.g., RSRQ), signal-to-interference ratio (e.g., SINR), and/or a specific offset from a perspective of a receiving UE for an inter-UE physical control channel demodulation reference signal (e.g., PSCCH DMRS), an inter-UE physical shared channel demodulation reference signal (e.g., PSSCH DMRS), and/or an inter-UE channel state information reference signal (e.g., SL CSI-RS) is greater than or equal to a certain threshold or is greater than a certain threshold, the receiving UE may transmit an inter-UE physical feedback channel (e.g., PSFCH) as a response to the transmitting UE.

And/or, for example, when a receiving UE successfully decodes an inter-UE physical channel (e.g., PSCCH/PSSCH), the receiving UE may transmit an inter-UE physical feedback channel (e.g., PSFCH) as a response to the transmitting UE.

For example, transmission resources of an inter-UE physical feedback channel (e.g., PSFCH) for beam management purposes may be independent of and/or different from transmission resources of an inter-UE physical feedback channel (e.g., PSFCH) for inter-UE HARQ-ACK (e.g., SL HARQ-ACK) feedback and/or for transmission of other control information (in terms of (pre-)configuration).

For example, the specific threshold may be a value that is (pre-)configured, a PC5-RRC configured value, and/or a value determined by the UE according to a block error rate (e.g., BLER) (that is (pre-)configured, PC5-RRC configured, and/or predefined).

For example, a threshold value determined by the UE based on a block error rate (e.g., BLER) may be a value of maximum reference signal received power (e.g., RSRP), reference signal received quality (e.g., RSRQ), and/or signal-to-interference ratio (e.g., SINR), which allows a block error rate (e.g., BLER) for first inter-UE control information (e.g., 1st SCI), second inter-UE control information (e.g., 2nd SCI), and/or an inter-UE physical shared channel (e.g., PSSCH) to be less than or equal to, or less than, a block error rate (e.g., BLER) threshold value that is (pre-)configured, predefined, and/or PC5-RRC configured.

For example, a threshold value determined by the UE based on a block error rate (e.g., BLER) may be a value of minimum reference signal received power (e.g., RSRP), reference signal received quality (e.g., RSRQ), and/or signal-to-interference ratio (e.g., SINR), which allows a block error rate (e.g., BLER) for first inter-UE control information (e.g., 1st SCI), second inter-UE control information (e.g., 2nd SCI), and/or an inter-UE physical shared channel (e.g., PSSCH) to be greater than or equal to, or greater than, the threshold value.

For example, the receiving UE may transmit an inter-UE physical feedback channel (e.g., PSFCH) for all or some of a plurality of inter-UE physical channel (e.g., PSCCH/PSSCH) transmissions transmitted by the transmitting UE, and some inter-UE physical channel (e.g., PSCCH/PSSCH) transmissions related to a transmission target of the inter-UE physical feedback channel (e.g., PSFCH) may be ones having the highest reference signal received power (e.g., RSRP), reference signal received quality (e.g., RSRQ), and/or signal-to-interference ratio (e.g., SINR) measurement value from the perspective of the receiving UE, or may include transmissions corresponding to a certain number from the highest. For example, the certain number may include a (pre-)configured value, a predefined value, or a value determined by the UE.

For example, with respect to transmission resources of an inter-UE physical feedback channel (e.g., PSFCH) for beam management purposes, a plurality of inter-UE physical feedback channel occasions (e.g., PSFCH occasions) may exist for a single inter-UE physical channel (e.g., PSCCH/PSSCH) or an inter-UE physical channel (e.g., PSCCH/PSSCH) slot, and whether the plurality of inter-UE physical feedback channel occasions (e.g., PSFCH occasions) exist and the number thereof may be (pre-)configured or configured through PC5-RRC.

For example, in an inter-UE physical channel (e.g., PSCCH/PSSCH) slot, inter-UE physical feedback channel (e.g., PSFCH) (frequency and/or code domain) resources may be distinguished according to a (reference) timing among inter-UE physical feedback channels (e.g., PSFCH), or may be independently (pre-)configured or PC5-RRC configured, respectively.

According to an embodiment of the present disclosure, when the receiving UE transmits an inter-UE physical feedback channel (e.g., PSFCH) as a response to the transmitting UE, an actual transmission may be performed in all or some of inter-UE physical feedback channel occasions (e.g., PSFCH occasions) corresponding to the inter-UE physical channel (e.g., PSCCH/PSSCH).

For example, at least for transmission spatial settings of an inter-UE physical feedback channel (e.g., PSFCH) in inter-UE physical feedback channel occasions (e.g., PSFCH occasions) in which the UE actually transmits the inter-UE physical feedback channel (e.g., PSFCH), the transmission spatial setting related to transmission and/or reception spatial settings for an inter-UE physical channel (e.g., PSCCH/PSSCH) corresponding to the inter-UE physical feedback channel (e.g., PSFCH) may be limited to being used.

For example, the transmitting UE may receive an inter-UE physical feedback channel (e.g., PSFCH) response related thereto in response to an inter-UE physical channel (e.g., PSCCH/PSSCH) transmission using a specific transmission spatial setting from the receiving UE, and may transmit an inter-UE physical channel (e.g., PSCCH/PSSCH) related to the inter-UE physical feedback channel (e.g., PSFCH) transmission to the receiving UE.

For example, in an inter-UE physical channel (e.g., PSCCH/PSSCH) related to an inter-UE physical feedback channel (e.g., PSFCH) transmission, a transmission spatial setting used by the transmitting UE for a previous inter-UE physical channel (e.g., PSCCH/PSSCH) corresponding to the inter-UE physical feedback channel (e.g., PSFCH) may be used as it is.

For example, an inter-UE physical channel (e.g., PSCCH/PSSCH) related to an inter-UE physical feedback channel (e.g., PSFCH) transmission may implicitly or explicitly indicate transmission spatial setting information used by the transmitting UE for an inter-UE physical channel (e.g., PSCCH/PSSCH) corresponding to the inter-UE physical feedback channel (e.g., PSFCH), transmission/reception spatial setting information for the inter-UE physical feedback channel (e.g., PSFCH), and/or information for the inter-UE physical feedback channel occasion (e.g., PSFCH occasion).

For example, an inter-UE physical channel (e.g., PSCCH/PSSCH) related to an inter-UE physical feedback channel (e.g., PSFCH) transmission may be transmitted within a window generated based on an inter-UE physical feedback channel occasion (e.g., PSFCH occasion) for the inter-UE physical feedback channel (e.g., PSFCH).

For example, a cast type (e.g., unicast), source ID, destination ID, and/or a combination thereof of an inter-UE physical channel (e.g., PSCCH/PSSCH) related to an inter-UE physical feedback channel (e.g., PSFCH) transmission may be the same as those of a previous inter-UE physical channel (e.g., PSCCH/PSSCH) of a transmitting UE corresponding to the inter-UE physical feedback channel (e.g., PSFCH).

For example, when a receiving UE receives an inter-UE physical channel (e.g., PSCCH/PSSCH) from a transmitting UE as a response to an inter-UE physical feedback channel (e.g., PSFCH) after the receiving UE has transmitted the inter-UE physical feedback channel (e.g., PSFCH), the receiving UE may determine that a beam recovery or beam management operation has been successfully completed.

For example, when a receiving UE fails to receive an inter-UE physical channel (e.g., PSCCH/PSSCH) from a transmitting UE within a certain time interval as a response to an inter-UE physical feedback channel (e.g., PSFCH) after the receiving UE has transmitted the inter-UE physical feedback channel (e.g., PSFCH), the receiving UE may determine that a beam recovery or beam management operation has failed.

And/or, for example, when a receiving UE fails to receive an inter-UE physical channel (e.g., PSCCH/PSSCH) from a transmitting UE within a certain time interval as a response to an inter-UE physical feedback channel (e.g., PSFCH) after the receiving UE has transmitted the inter-UE physical feedback channel (e.g., PSFCH), the receiving UE may re-perform an operation of receiving an inter-UE physical channel (e.g., PSCCH/PSSCH) from the transmitting UE and/or an operation of transmitting an inter-UE physical feedback channel (e.g., PSFCH) for beam management purposes to the transmitting UE.

For example, a transmitting UE may indicate/transmit candidate beam reference signals and/or channel state information reporting request (e.g., CSI reporting request) information to a receiving UE (periodically and/or aperiodically). For example, the beam reference signals may include an inter-UE physical broadcast channel demodulation reference signal (e.g., PSBCH DMRS), an inter-UE physical control channel demodulation reference signal (e.g., PSCCH DMRS), an inter-UE physical shared channel demodulation reference signal (e.g., PSSCH DMRS), and/or an inter-UE channel state information reference signal (e.g., SL CSI-RS).

According to an embodiment of the present disclosure, a receiving UE may measure a reference signal received power (e.g., RSRP) based on candidate beam reference signals. For example, when a sum of the measured reference signal received power (e.g., RSRP) value and/or a specific offset is greater than or equal to, or greater than, a specific threshold value, the receiving UE may report related candidate beam reference signal information (reference signal resource set ID) or beam-related information (e.g., beam ID or channel state information request (e.g., CSI request) ID), and/or the reference signal received power (e.g., RSRP) measurement value to a transmitting UE through an inter-UE physical channel (e.g., PSCCH/PSSCH). For example, the threshold value may be (pre-)configured or PC5-RRC configured.

For example, the beam reference signals may include an inter-UE physical broadcast channel demodulation reference signal (e.g., PSBCH DMRS), an inter-UE physical control channel demodulation reference signal (e.g., PSCCH DMRS), an inter-UE physical shared channel demodulation reference signal (e.g., PSSCH DMRS), and/or an inter-UE channel state information reference signal (e.g., SL CSI-RS).

According to an embodiment of the present disclosure, a receiving UE that receives inter-UE communication (e.g., SL communication) channel state information reporting request (e.g., CSI reporting request), if a sum of a reference signal received power (e.g., RSRP) measurement value for candidate beam reference signals from the perspective of the receiving UE and/or a specific offset is less than or equal to, or less than, a specific threshold value, may omit all or some of channel state information (e.g., CSI) reporting.

For example, in the above situation, a receiving UE may include only RI and/or CQI in channel state information reporting (e.g., CSI reporting). For example, the candidate beam reference signals may include an inter-UE physical broadcast channel demodulation reference signal (e.g., PSBCH DMRS), an inter-UE physical control channel demodulation reference signal (e.g., PSCCH DMRS), an inter-UE physical shared channel demodulation reference signal (e.g., PSSCH DMRS), and/or an inter-UE channel state information reference signal (e.g., SL CSI-RS).

According to an embodiment of the present disclosure, a receiving UE that receives inter-UE communication (e.g., SL communication) channel state information reporting request (e.g., CSI reporting request), if a sum of a reference signal received power (e.g., RSRP) measurement value for candidate beam reference signals from the perspective of the receiving UE and/or a specific offset is less than or equal to, or less than, a specific threshold value, may indicate the above situation to a transmitting UE.

For example, the candidate beam reference signals may include an inter-UE physical broadcast channel demodulation reference signal (e.g., PSBCH DMRS), an inter-UE physical control channel demodulation reference signal (e.g., PSCCH DMRS), an inter-UE physical shared channel demodulation reference signal (e.g., PSSCH DMRS), and/or an inter-UE channel state information reference signal (e.g., SL CSI-RS).

According to an embodiment of the present disclosure, when a receiving UE transmits a response inter-UE physical channel (e.g., PSCCH/PSSCH) to a transmitting UE, the receiving UE may transmit beam management-related information multiple times, and transmission spatial settings (used in) the plurality of inter-UE physical channel (e.g., PSCCH/PSSCH) transmissions may be different. For example, when the receiving UE transmits a response inter-UE physical channel (e.g., PSCCH/PSSCH) using the different transmission spatial settings, the receiving UE may also indicate information for the transmission spatial settings along with it.

For example, when a transmitting UE receives the response inter-UE physical channel (e.g., PSCCH/PSSCH) from a receiving UE, the transmitting UE may transmit a confirmation message for it. For example, the confirmation message may be in the form of an inter-UE physical channel (e.g., PSCCH/PSSCH), and/or a unicast session for the confirmation message may be the same as a unicast session for the response inter-UE physical channel (e.g., PSCCH/PSSCH). That is, the confirmation message may be transmitted in a form in which a source ID of the response inter-UE physical channel (e.g., PSCCH/PSSCH) becomes a destination ID, and a destination ID becomes a source ID. For example, through an inter-UE physical channel (e.g., PSCCH/PSSCH) for the purpose of the confirmation message, transmission (or reception) spatial setting information determined by the transmitting UE based on a measurement of the receiving UE and/or time interval or time information for performing the spatial setting may be indicated to the receiving UE.

For example, the confirmation message may be inter-UE HARQ-ACK (e.g., SL HARQ-ACK) feedback and/or an inter-UE physical feedback channel (e.g., PSFCH) for the response inter-UE physical channel (e.g., PSCCH/PSSCH). For example, the inter-UE physical feedback channel (e.g., PSFCH) may correspond to a resource set separately (pre-)configured or PC5-RRC configured for beam management purposes, and a single or a plurality of inter-UE physical feedback channel occasions (e.g., PSFCH occasions) may exist for the response inter-UE physical channel (e.g., PSCCH/PSSCH).

For example, when a receiving UE receives a confirmation message from a transmitting UE, the receiving UE may determine that a beam recovery or beam management operation has been successfully completed.

For example, when a receiving UE does not receive a confirmation message from a transmitting UE, the receiving UE may determine that a beam recovery or beam management operation is ongoing and/or has failed. For example, the ongoing of the beam recovery or beam management operation may be that the receiving UE retransmits the response inter-UE physical channel (e.g., PSCCH/PSSCH). For example, when the number of (re)transmissions of the response inter-UE physical channel (e.g., PSCCH/PSSCH) by the receiving UE is greater than or equal to, or greater than, a certain level (e.g., a threshold value (pre-)configured or PC5-RRC configured), the receiving UE may determine that the beam recovery or beam management operation has failed.

According to an embodiment of the present disclosure, determination that confirmation message reception is successful may be limited to a case in which the corresponding feedback is ACK when inter-UE HARQ-ACK (e.g., SL HARQ-ACK) feedback is performed. This is because, when the corresponding feedback is ACK, it may be determined that the transmitting UE has successfully obtained beam-related measurement information from the response inter-UE physical channel (e.g., PSCCH/PSSCH) transmitted by the receiving UE.

According to an embodiment of the present disclosure, determination that confirmation message reception is successful may be limited to a case in which the corresponding feedback is ACK or NACK when inter-UE HARQ-ACK (e.g., SL HARQ-ACK) feedback is performed. This is because, even when the corresponding feedback is NACK, it may be determined that the transmitting UE has successfully received the response inter-UE physical channel (e.g., PSCCH/PSSCH) transmitted by the receiving UE at least to the 2nd inter-UE control information (e.g., 2nd SCI).

According to an embodiment of the present disclosure, candidate beam reference signals in a base station-UE link (e.g., Uu link) operation (e.g., a synchronization signal block (e.g., SSB), an inter-UE physical broadcast channel demodulation reference signal (e.g., PSBCH DMRS), and/or a (periodic) channel state information reference signal (e.g., CSI-RS)) may be replaced in NR inter-UE communication (e.g., SL communication) with an inter-UE physical control channel demodulation reference signal (e.g., PSCCH DMRS), an inter-UE physical shared channel demodulation reference signal (e.g., PSSCH DMRS), an inter-UE physical broadcast channel demodulation reference signal (e.g., PSBCH DMRS), an inter-UE synchronization signal block (e.g., S-SSB), and/or a (periodic and/or aperiodic) inter-UE channel state information reference signal (e.g., SL CSI-RS).

For example, a physical random access channel transmission linked to candidate beam reference signals in a base station-UE link (e.g., Uu link) operation may be an inter-UE physical channel (e.g., PSCCH/PSSCH) and/or an inter-UE physical feedback channel (e.g., PSFCH) in NR inter-UE communication (e.g., SL communication).

For example, a physical base station-to-UE control channel (e.g., PDCCH) scrambled by a C-RNTI as a response to a physical random access channel in a base station-UE link (e.g., Uu link) operation may be an inter-UE physical channel (e.g., PSCCH/PSSCH) and/or an inter-UE physical feedback channel (e.g., PSFCH) in NR inter-UE communication (e.g., SL communication).

For example, when a transmitting UE fails to receive inter-UE HARQ-ACK (e.g., SL HARQ-ACK) feedback from a receiving UE (greater than or equal to a certain level) for a specific transmission beam or transmission spatial setting, and/or receives a NACK, the transmitting UE may determine a beam failure for the transmission spatial setting. For example, the transmitting UE may separately manage/report a case in which inter-UE HARQ-ACK (e.g., SL HARQ-ACK) feedback is not received and a case in which a NACK is received.

For example, a beam failure may be a case where a transmitting UE does not receive any inter-UE HARQ-ACK (e.g., SL HARQ-ACK) feedback within a ((pre-)configured or PC5-RRC configured) window and/or receives (only) a NACK.

For example, a beam failure may be a case where a transmitting UE does not receive inter-UE HARQ-ACK (e.g., SL HARQ-ACK) feedback for a specific number ((pre-)configured or PC5-RRC configured) of times ((continuously or discontinuously)) and/or receives (only) a NACK.

According to an embodiment of the present disclosure, for a specific transmission beam or transmission spatial setting, a transmitting UE may determine a beam failure for the transmission spatial setting by using reference signal received power (e.g., RSRP), reference signal received quality (e.g., RSRQ), and/or signal-to-interference ratio (e.g., SINR) measurement values based on a beam failure detection reference signal received from a receiving UE. For example, the beam failure detection reference signal may include inter-UE physical shared channel demodulation reference signal (e.g., PSSCH DMRS), inter-UE physical shared channel demodulation reference signal (e.g., PSSCH DMRS), inter-UE channel state information reference signal (e.g., SL CSI-RS), inter-UE synchronization signal block (e.g., S-SSB), and/or inter-UE physical broadcast channel demodulation reference signal (e.g., PSBCH DMRS).

For example, a transmitting UE may determine a beam failure for the transmission spatial setting based on a difference between reference or actual transmit power for a beam failure detection reference signal and a reference signal received power (e.g., RSRP) value, reference signal received quality (e.g., RSRQ), and/or signal-to-interference ratio (e.g., SINR) (for example, when the difference value is less than or equal to or less than a (pre-)configured or PC5-RRC configured threshold value), and/or may select a suitable transmission beam or transmission spatial setting.

For example, when the quality of a beam failure detection reference signal (for example, L1/L3 reference signal received power (e.g., RSRP), reference signal received quality (e.g., RSRQ), and/or signal-to-interference ratio (e.g., SINR) measurement values), a specific offset value, and/or a sum thereof is less than or equal to or less than a (pre-)configured and/or PC5-RRC configured threshold value, a receiving UE may determine a beam failure for a transmission/reception spatial setting corresponding to the reference signal.

For example, the beam failure detection reference signal may include inter-UE physical shared channel demodulation reference signal (e.g., PSSCH DMRS) and/or inter-UE physical shared channel demodulation reference signal (e.g., PSSCH DMRS) and/or inter-UE channel state information reference signal (e.g., SL CSI-RS) and/or inter-UE synchronization signal block (e.g., S-SSB) and/or inter-UE physical broadcast channel demodulation reference signal (e.g., PSBCH DMRS).

For example, the beam failure detection reference signal may be (pre-)configured and/or PC5-RRC configured in the form of reference signal type, reference signal resource set information, transmission/reception spatial setting information, and the like.

For example, the specific offset value and/or threshold value may be different depending on a transmit power control related indication value received from a transmitting UE.

For example, when transmitting a beam failure detection reference signal, a transmitting UE may deliver/provide a transmit power control related indication value corresponding thereto to a receiving UE according to a transmit power value or range.

According to an embodiment of the present disclosure, when the quality of a beam failure detection reference signal (for example, L1/L3 reference signal received power (e.g., RSRP), reference signal received quality (e.g., RSRQ), and/or signal-to-interference ratio (e.g., SINR) measurement values), a specific offset value, and/or a sum thereof is less than or equal to or less than a (pre-)configured, PC5-RRC configured, and/or UE-determined threshold value based on block error rate (e.g., BLER), a receiving UE may determine a beam failure for a transmission and/or reception spatial setting corresponding to the reference signal.

For example, the beam failure detection reference signal may include inter-UE physical shared channel demodulation reference signal (e.g., PSSCH DMRS), inter-UE physical shared channel demodulation reference signal (e.g., PSSCH DMRS), inter-UE channel state information reference signal (e.g., SL CSI-RS), inter-UE synchronization signal block (e.g., S-SSB), and/or inter-UE physical broadcast channel demodulation reference signal (e.g., PSBCH DMRS).

For example, the threshold value determined by the UE based on block error rate (e.g., BLER) may be in the form of a maximum signal-to-interference ratio (e.g., SINR) value such that the block error rate (e.g., BLER) for first inter-UE control information (e.g., 1st SCI), second inter-UE control information (e.g., 2nd SCI), and/or inter-UE physical shared channel (e.g., PSSCH) becomes less than or equal to or less than a (pre-)configured, predefined, and/or PC5-RRC configured block error rate (e.g., BLER) threshold value.

Or, for example, the UE-determined threshold value based on block error rate (e.g., BLER) may be in the form of a minimum signal-to-interference ratio (e.g., SINR) value such that the block error rate (e.g., BLER) for first inter-UE control information (e.g., 1st SCI), second inter-UE control information (e.g., 2nd SCI), and/or inter-UE physical shared channel (e.g., PSSCH) becomes greater than or equal to or greater than a (pre-)configured, predefined, and/or PC5-RRC configured block error rate (e.g., BLER) threshold value.

According to an embodiment of the present disclosure, when a receiving UE receives an inter-UE physical channel (e.g., PSCCH/PSSCH) from a transmitting UE by using a first reception spatial setting in a specific slot or time duration, the receiving UE may perform a reception operation for an inter-UE channel (e.g., SL channel) or an inter-UE physical channel (e.g., PSCCH/PSSCH) by using the first reception spatial setting or by using a reception spatial setting determined based on the first reception spatial setting (for a certain time duration) after a specific time point from a reception time point of the inter-UE physical channel (e.g., PSCCH/PSSCH) and/or a transmission time point of the inter-UE physical feedback channel (e.g., PSFCH) of the receiving UE.

According to an embodiment of the present disclosure, when a receiving UE fails to decode the inter-UE physical channel (e.g., PSCCH/PSSCH), the receiving UE may perform a reception operation for an inter-UE channel (e.g., SL channel) or an inter-UE physical channel (e.g., PSCCH/PSSCH) by using the first reception spatial setting or by using a reception spatial setting determined based on the first reception spatial setting (for a certain time duration) after a specific time point from a reception time point of the inter-UE physical channel (e.g., PSCCH/PSSCH) and/or a transmission time point of the inter-UE physical feedback channel (e.g., PSFCH) of the receiving UE.

According to an embodiment of the present disclosure, when a receiving UE determines a NACK for a transport block (e.g., TB) of the inter-UE physical channel (e.g., PSCCH/PSSCH), the receiving UE may perform a reception operation for an inter-UE channel (e.g., SL channel) or an inter-UE physical channel (e.g., PSCCH/PSSCH) by using the first reception spatial setting or by using a reception spatial setting determined based on the first reception spatial setting (for a certain time duration) after a specific time point from a reception time point of the inter-UE physical channel (e.g., PSCCH/PSSCH) and/or a transmission time point of the inter-UE physical feedback channel (e.g., PSFCH) of the receiving UE.

According to an embodiment of the present disclosure, when a receiving UE transmits an inter-UE physical feedback channel (e.g., PSFCH) for a transport block (e.g., TB) of the inter-UE physical channel (e.g., PSCCH/PSSCH) to a transmitting UE, the receiving UE may perform a reception operation for an inter-UE channel (e.g., SL channel) or an inter-UE physical channel (e.g., PSCCH/PSSCH) by using the first reception spatial setting or by using a reception spatial setting determined based on the first reception spatial setting (for a certain time duration) after a specific time point from a reception time point of the inter-UE physical channel (e.g., PSCCH/PSSCH) and/or a transmission time point of the inter-UE physical feedback channel (e.g., PSFCH) of the receiving UE.

The operation may be performed because the receiving UE can expect to receive a retransmission from the transmitting UE. For example, the specific time point and/or the certain time duration may be (pre-)configured and/or PC5-RRC configured.

According to an embodiment of the present disclosure, when a receiving UE transmits channel occupancy time (e.g., COT) sharing information, preferred resource set, non-preferred resource set information, and/or third time interval information to a transmitting UE, the receiving UE may perform a reception operation for an inter-UE channel (e.g., SL channel) or an inter-UE physical channel (e.g., PSCCH/PSSCH) by using a reception spatial setting for transmission of the transmitting UE or a reception spatial setting determined based on the reception spatial setting for the time interval for the information.

For example, a reception spatial setting for transmission of the transmitting UE may be a reception spatial setting that a receiving UE used to receive a request for preferred resource set information and/or non-preferred resource set information from the transmitting UE, or may be a reception spatial setting related to a transmission spatial setting of the transmitting UE for transmission of the request.

For example, a reception spatial setting for transmission of the transmitting UE may be a reception spatial setting that a receiving UE previously used for the same unicast inter-UE physical channel (e.g., PSCCH/PSSCH) from the transmitting UE, or may be a reception spatial setting related to a transmission spatial setting of the transmitting UE for the unicast inter-UE physical channel (e.g., PSCCH/PSSCH).

According to an embodiment of the present disclosure, when a UE fails to decode a transport block (e.g., TB) transmitted through first inter-UE control information (e.g., 1st SCI), second inter-UE control information (e.g., 2nd SCI), and/or inter-UE physical shared channel (e.g., PSSCH), the UE may report a beam failure instance to a higher layer.

And/or, for example, when a measurement value of reference signal received power (e.g., RSRP), reference signal received quality (e.g., RSRQ), and/or signal-to-interference ratio (e.g., SINR) based on inter-UE physical control channel demodulation reference signal (e.g., PSCCH DMRS), inter-UE physical shared channel demodulation reference signal (e.g., PSSCH DMRS), and inter-UE channel state information reference signal (e.g., SL CSI-RS) is less than or equal to or less than a specific threshold value, the UE may report a beam failure instance to a higher layer.

For example, the specific threshold value may be a value that is (pre-)configured, PC5-RRC configured, or determined according to target block error rate (e.g., BLER) for first inter-UE control information (e.g., 1st SCI), second inter-UE control information (e.g., 2nd SCI), and/or data.

According to an embodiment of the present disclosure, a transmitting UE of an inter-UE physical channel (e.g., PSCCH/PSSCH) may determine whether an inter-UE physical feedback channel (e.g., PSFCH) corresponding to the inter-UE physical channel (e.g., PSCCH/PSSCH) is detected and/or measure the ratio thereof per transmission spatial setting and/or reception spatial setting for the inter-UE physical channel (e.g., PSCCH/PSSCH).

And/or, for example, the transmitting UE may report, to a higher layer, a beam failure instance and/or the number of discontinuous transmissions (e.g., DTX) or the ratio of discontinuous transmissions (e.g., DTX) for a spatial setting, when an inter-UE physical feedback channel (e.g., PSFCH) for an inter-UE physical channel (e.g., PSCCH/PSSCH) it has transmitted is not detected and/or the number or ratio of not being detected, from the receiving UE, is greater than or equal to or greater than a ((pre-)configured, PC5-RRC configured, and/or predefined value) certain level.

For example, a UE, for all or some spatial setting for an inter-UE physical channel (e.g., PSCCH/PSSCH), may report a beam failure instance to a higher layer when the number or ratio of inter-UE physical feedback channels (e.g., PSFCHs) being not detected is greater than or equal to or greater than a ((pre-)configured, PC5-RRC configured, and/or predefined value) certain level. For example, the some spatial setting may be (pre-)configured and/or PC5-RRC configured as a beam failure target.

For example, the inter-UE physical feedback channel (e.g., PSFCH) being not detected and discontinuous transmission (e.g., DTX) may include a case where an inter-UE physical channel (e.g., PSCCH/PSSCH) transmitting UE performs an inter-UE physical feedback channel (e.g., PSFCH) reception operation, and a case where an inter-UE physical channel (e.g., PSCCH/PSSCH) transmitting UE has failed to detect an inter-UE physical feedback channel (e.g., PSFCH) on inter-UE physical feedback channel occasion(s) (e.g., PSFCH occasion(s)) corresponding to an inter-UE physical channel (e.g., PSCCH/PSSCH) and/or has failed to detect an ACK.

For example, the inter-UE physical channel (e.g., PSCCH/PSSCH) may be limited (interpreted) to inter-UE physical channel (e.g., PSCCH/PSSCH) transmission in a case where unicast and/or ACK/NACK feedback is configured/indicated.

For example, a UE may select a suitable spatial setting according to a number and/or ratio value of discontinuous transmissions (e.g., DTX) per (transmission or reception) spatial setting.

According to an embodiment of the present disclosure, an inter-UE physical channel (e.g., PSCCH/PSSCH) transmitting UE may determine whether an inter-UE physical feedback channel (e.g., PSFCH) corresponding to the inter-UE physical channel (e.g., PSCCH/PSSCH) is detected and/or measure the ratio thereof for a transmission spatial setting, a reception spatial setting, and/or transmission/reception spatial setting(s) corresponding to beam failure detection (e.g., BFD) (through (pre-)configuration, PC5-RRC configuration, and/or UE-selection) for the inter-UE physical channel (e.g., PSCCH/PSSCH).

And/or, for example, the transmitting UE may start or resume reference signal transmission using transmission and/or reception spatial setting(s) corresponding to BFR (through (pre-)configuration, PC5-RRC configuration, and/or UE selection), for an inter-UE physical channel (e.g., PSCCH/PSSCH) it has transmitted, an inter-UE physical feedback channel (e.g., PSFCH) is not detected and/or the number or ratio thereof, from the receiving UE, is greater than or equal to or greater than a ((pre-)configured and/or PC5-RRC configured and/or predefined) certain value.

For example, resources for reference signal transmission using transmission and/or reception spatial setting(s) corresponding to beam failure recovery (e.g., BFR) may be (pre-)configured, PC5-RRC configured, and/or indicated by inter-UE control information (e.g., SCI).

According to an embodiment of the present disclosure, an inter-UE physical channel (e.g., PSCCH/PSSCH) receiving UE may transmit a beam failure indication to an inter-UE physical channel (e.g., PSCCH/PSSCH) transmitting UE (through an inter-UE physical feedback channel (e.g., PSFCH) other than for inter-UE HARQ-ACK (e.g., SL HARQ-ACK) feedback), when a measurement value of reference signal received power (e.g., RSRP), reference signal received quality (e.g., RSRQ), and/or signal-to-interference ratio (e.g., SINR) based on inter-UE physical control channel demodulation reference signal (e.g., PSCCH DMRS), inter-UE physical shared channel demodulation reference signal (e.g., PSSCH DMRS), and/or inter-UE channel state information reference signal (e.g., SL CSI-RS) is less than or equal to or less than a specific threshold value.

For example, an inter-UE physical channel (e.g., PSCCH/PSSCH) transmitting UE may report a beam failure instance to a higher layer, when the transmitting UE receives the beam failure indication from a receiving UE and/or receives it greater than or equal to or greater than a certain level ((pre-)configured and/or PC5-RRC configured threshold value) per transmission spatial setting and/or reception spatial setting for the inter-UE physical channel (e.g., PSCCH/PSSCH).

For example, when a UE receives the beam failure indication for all or some of spatial settings for an inter-UE physical channel (e.g., PSCCH/PSSCH) and/or receives it greater than or equal to or greater than a certain level ((pre-)configured and/or PC5-RRC configured threshold value), the UE may report a beam failure instance to a higher layer.

According to an embodiment of the present disclosure, an inter-UE physical channel (e.g., PSCCH/PSSCH) receiving UE may start or resume reference signal monitoring and/or performing a measurement using a transmission/reception spatial setting(s) corresponding to a beam failure recovery (e.g., BFR), when reference signal received power (e.g., RSRP), reference signal received quality (e.g., RSRQ), and/or signal-to-interference ratio (e.g., SINR) measurement value based on inter-UE physical control channel demodulation reference signal (e.g., PSCCH DMRS), inter-UE physical shared channel demodulation reference signal (e.g., PSSCH DMRS), and/or inter-UE channel state information reference signal (e.g., SL CSI-RS) for a transmission/reception spatial setting(s) corresponding to a beam failure detection (e.g., BFD) (through (pre-)configuration, PC5-RRC configuration, and/or UE selection) is less than or equal to or less than a specific threshold value.

For example, resources for reference signal reception using transmission and/or reception spatial setting(s) corresponding to beam failure recovery (e.g., BFR) may be (pre-)configured, PC5-RRC configured, and/or indicated by inter-UE control information (e.g., SCI).

According to an embodiment of the present disclosure, a UE may report, to a higher layer, a beam failure instance when a measurement value of reference signal received power (e.g., RSRP), reference signal received quality (e.g., RSRQ), and/or signal-to-interference-plus-noise ratio (e.g., SINR) based on a beam failure detection reference signal (pre-)configured and/or PC5-RRC configured is less than or equal to or less than a specific threshold value. For example, the beam failure detection reference signal may include an inter-UE synchronization signal block (e.g., S-SSB), an inter-UE physical broadcast channel demodulation signal (e.g., PSBCH DMRS), an inter-UE physical control channel demodulation reference signal (e.g., PSCCH DMRS), an inter-UE physical shared channel demodulation reference signal (e.g., PSSCH DMRS), and/or a channel state information reference signal (e.g., CSI-RS).

For example, the beam failure detection reference signal and an inter-UE physical shared channel demodulation reference signal (e.g., PSSCH DMRS) and/or an inter-UE physical shared channel demodulation reference signal (e.g., PSSCH DMRS) may have a QCL (Type D) relationship and/or may be a case where spatial settings are equal or related.

According to an embodiment of the present disclosure, a UE may perform the measurement-based beam failure detection operation when there exists a reference signal or transmission spatial setting in which a measurement value of reference signal received power (e.g., RSRP), reference signal received quality (e.g., RSRQ), and/or signal-to-interference-plus-noise ratio (e.g., SINR) based on a reference signal other than the detected reference signal and/or on a transmission spatial setting other than a transmission spatial setting for the detected reference signal is greater than or equal to or greater than a (pre-)configured or PC5-RRC configured threshold value.

For example, when there does not exist a reference signal or transmission spatial setting in which a measurement value of reference signal received power (e.g., RSRP), reference signal received quality (e.g., RSRQ), and/or signal-to-interference-plus-noise ratio (e.g., SINR) based on a reference signal other than the detected reference signal and/or on a transmission spatial setting other than a transmission spatial setting for the detected reference signal is greater than or equal to or greater than a (pre-)configured or PC5-RRC configured threshold value, the UE may declare a radio link failure (e.g., RLF) and/or release a unicast link.

For example, when there does not exist a reference signal or transmission spatial setting in which a measurement value of reference signal received power (e.g., RSRP), reference signal received quality (e.g., RSRQ), and/or signal-to-interference-plus-noise ratio (e.g., SINR) based on a reference signal other than the detected reference signal and/or on a transmission spatial setting other than a transmission spatial setting for the detected reference signal is greater than or equal to or greater than a (pre-)configured or PC5-RRC configured threshold value, the UE may perform triggering of inter-UE communication (e.g., SL communication) reference signal and/or inter-UE communication (e.g., SL communication) channel state information reporting (e.g., CSI reporting) for beam management to the UE transmitting the reference signal. For example, while transmitting the beam management related signal, a beam failure recovery request may be transmitted together.

According to an embodiment of the present disclosure, when performing resource (re)selection, a UE may consider reserved resources of the UE (for transmission of the same transport block (e.g., TB) or another transport block (e.g., TB)), transmission spatial setting information for reserved resources of (another UE) detected by the UE, reception spatial setting information, transmission spatial setting information for resource (re)selection of the UE, reception spatial setting information of a receiving UE for transmission of the UE, an area in which the receiving UE expects reception from the UE, and/or an area in which the receiving UE uses reception spatial setting for reception from the UE.

For example, when performing resource (re)selection, a UE may preferentially use, as transmission resources, resources in a time interval in which a target receiving UE uses a reception spatial setting related to or corresponding to a transmission spatial setting of the UE.

For example, when performing resource (re)selection, a UE may deprioritize using resources outside a time interval in which a target receiving UE uses a reception spatial setting related to or corresponding to a transmission spatial setting of the UE as transmission resources.

For example, when performing resource (re)selection, if a transmission spatial setting for (pre-selected) reserved resources of a UE is different from a transmission spatial setting for resource (re)selection of the UE, and/or if a transmission spatial setting for (pre-selected) reserved resources of the UE is not related to a transmission spatial setting for resource (re)selection of the UE, does not cover a transmission spatial setting for resource (re)selection of the UE, and/or is not covered by the transmission spatial setting for resource (re)selection of the UE, the UE may deprioritize or avoid using resources in a slot in which the reserved resources are located.

For example, when performing resource (re)selection, if a transmission spatial setting for (pre-selected) reserved resources of a UE is the same as a transmission spatial setting for resource (re)selection of the UE, if a transmission spatial setting for (pre-selected) reserved resources of the UE is related to a transmission spatial setting for resource (re)selection of the UE, and/or if a transmission spatial setting for resource (re)selection of the UE covers or is not covered by a transmission spatial setting for (pre-selected) reserved resources of the UE, the UE may prioritize using resources in a slot in which the reserved resources are located.

For example, the reserved resource may be an inter-UE synchronization signal block (e.g., S-SSB) transmission/resource (for an additional purpose such as beam management). For example, an inter-UE synchronization signal block (e.g., S-SSB) (inter-UE primary synchronization signal (e.g., S-PSS)/inter-UE secondary synchronization signal (e.g., S-SSS)/inter-UE physical broadcast channel demodulation signal (e.g., PSBCH DMRS)) sequence, an inter-UE physical broadcast channel (e.g., PSBCH) scrambling ID, and/or inter-UE physical broadcast channel (e.g., PSBCH) content may be different according to transmission/reception spatial setting information for inter-UE synchronization signal block (e.g., S-SSB) transmission, source ID/destination ID, and/or a PC5-RRC configured value.

For example, a UE may additionally perform transmission/reception of an inter-UE synchronization signal block (e.g., S-SSB) between specific UEs, and the additional inter-UE synchronization signal block (e.g., S-SSB) resource may be included in a resource pool, and/or the additional inter-UE synchronization signal block (e.g., S-SSB) transmission/reception resource and/or whether the transmission exists or an indication thereof may be indicated to the UE through inter-UE control information (e.g., SCI). For example, the additional inter-UE synchronization signal block (e.g., S-SSB) may be used for an inter-UE beam management purpose.

According to an embodiment of the present disclosure, a resource location and/or a set of an inter-UE synchronization signal block (e.g., S-SSB) resource for a synchronization purpose and an inter-UE synchronization signal block (e.g., S-SSB) for a beam management purpose may be different, separately (pre-)configured, and/or PC5-RRC configured. For example, a structure of an inter-UE synchronization signal block (e.g., S-SSB) for a synchronization purpose and a structure of an inter-UE synchronization signal block (e.g., S-SSB) for a beam management purpose may be different, and/or a structure of an inter-UE synchronization signal block (e.g., S-SSB) for a beam management purpose may consist of an inter-UE primary synchronization signal (e.g., S-PSS), an inter-UE secondary synchronization signal (e.g., S-SSS), an inter-UE physical broadcast channel demodulation signal (e.g., PSBCH DMRS), and/or an inter-UE physical broadcast channel (e.g., PSBCH), and/or a structure of an inter-UE synchronization signal block (e.g., S-SSB) for a beam management purpose may include first inter-UE control information (e.g., 1st SCI) and/or second inter-UE control information (e.g., 2nd SCI).

Meanwhile, a plurality of unicast links may exist between UE1 and UE2, and source/destination IDs of UE1 and source/destination IDs of UE2 for each unicast link may be different.

Meanwhile, transmitting reference signals for beam management per unicast link may be inefficient in terms of overhead and/or in terms of power consumption of a reference signal transmitting UE.

For example, UE1 may activate or deactivate transmission of reference signals for a beam management purpose for a plurality of unicast links, and/or may use a second reference signal for a beam management purpose for a second unicast link for beam management of a first unicast link and/or utilize measurement results and beam indication information based on the second reference signal.

For example, unicast link information between UE1 and UE2 (for example, UE1 ID, UE2 ID, and/or all or some of reference signal information for a beam management purpose) may be exchanged with each other, and beam management between UE1 and UE2 may be shared or commonly performed based thereon. For example, a reference signal sequence for a beam management purpose may be determined based on an additional ID, and/or the additional ID may be linked to or related to information or an ID for a first unicast link of UE1 and/or information or an ID for a second unicast link.

According to an embodiment of the present disclosure, a UE may perform measurement based on a plurality of (reception) reference signal sets, and the UE may group specific reference signal sets into a common location (e.g., co-located) based on measurement values for different reference signal sets and/or may indicate/report the common location grouping (co-located grouping) information to a reference signal transmitting UE. The common location (co-location) may mean that the UE transmitting different reference signal sets received by the UE is the same.

For example, a UE may receive measurement reporting based on a plurality of (transmission) reference signal sets, and the UE may group specific reference signal sets into a common location (e.g., co-located) based on measurement values for different reference signal sets and/or may indicate/report the common location grouping (co-located grouping) information to a reference signal receiving UE. The common location (co-location) may mean that a UE receiving different reference signal sets transmitted by the UE is the same.

For example, the common location grouping (co-located grouping) may be a case where a difference of measurement values based on different reference signal sets is less than or equal to or less than a certain level ((pre-)configured and/or PC5-RRC configured and/or UE-determined value). For example, based on the common location grouping (co-located grouping) information, a UE may assume/configure different beam information for different resource block (e.g., RB) sets to be co-located and/or in a QCL (Type D) relationship.

According to an embodiment of the present disclosure, spatial setting information for an SL transmission may be differently or independently changed per cast type, unicast session, receiver for an SL transmission, type of an inter-UE channel (e.g., SL channel), (transmission and/or reception) resource pool, mobility related information of a UE (for example, the speed, the velocity, the direction, the acceleration, the position, the height, etc.), transmission priority value, reception priority value, SL transmission for which an inter-UE HARQ-ACK (e.g., SL HARQ-ACK) feedback is enabled/disabled, inter-UE HARQ-ACK (e.g., SL HARQ-ACK) feedback option, QoS parameter, (remaining) PDB, HARQ process, beam process, source ID, destination ID, and/or transmission block (e.g., TB).

According to an embodiment of the present disclosure, spatial setting information for an SL transmission may be differently or independently managed per cast type, unicast session, receiver for an SL transmission, type of an inter-UE channel (e.g., SL channel), (transmission and/or reception) resource pool, mobility related information of a UE (for example, the speed, the velocity, the direction, the acceleration, the position, the height, etc.), transmission priority value, reception priority value, SL transmission for which an inter-UE HARQ-ACK (e.g., SL HARQ-ACK) feedback is enabled/disabled, inter-UE HARQ-ACK (e.g., SL HARQ-ACK) feedback option, QoS parameter, (remaining) PDB, HARQ process, beam process, source ID, destination ID, and/or transmission block (e.g., TB).

According to an embodiment of the present disclosure, spatial setting information for an SL transmission may be differently or independently configured per cast type, unicast session, receiver for an SL transmission, type of an inter-UE channel (e.g., SL channel), (transmission and/or reception) resource pool, mobility related information of a UE (for example, the speed, the velocity, the direction, the acceleration, the position, the height, etc.), transmission priority value, reception priority value, SL transmission for which an inter-UE HARQ-ACK (e.g., SL HARQ-ACK) feedback is enabled/disabled, inter-UE HARQ-ACK (e.g., SL HARQ-ACK) feedback option, QoS parameter, (remaining) PDB, HARQ process, beam process, source ID, destination ID, and/or transmission block (e.g., TB).

According to an embodiment of the present disclosure, a spatial setting information for an SL transmission may be differently or independently indicated per cast type, unicast session, receiver for an SL transmission, type of an inter-UE channel (e.g., SL channel), (transmission and/or reception) resource pool, mobility related information of a UE (for example, the speed, the velocity, the direction, the acceleration, the position, the height, etc.), transmission priority value, reception priority value, SL transmission for which an inter-UE HARQ-ACK (e.g., SL HARQ-ACK) feedback is enabled/disabled, inter-UE HARQ-ACK (e.g., SL HARQ-ACK) feedback option, QoS parameter, (remaining) PDB, HARQ process, beam process, source ID, destination ID, and/or transmission block (e.g., TB).

The various schemes of the present disclosure may be differently applied per unicast session (group), cast type, transmission priority value, reception priority value, an SL transmission for which an inter-UE HARQ-ACK (e.g., SL HARQ-ACK) feedback is enabled/disabled, inter-UE HARQ-ACK (e.g., SL HARQ-ACK) feedback option, QoS parameter, (remaining) PDB, congestion control level, the mobility related information per (transmission and/or reception) resource pool (for example, the speed, the velocity, the direction, the acceleration, the position, the height, etc.), SL transmission or a reception, HARQ process, beam process, source ID, destination ID, and/or transmission block (e.g., TB).

For example, in various embodiments of the present disclosure, the unit of the (pre-)configuration may be configured in the form of different combinations of the above. For example, in embodiments of the present disclosure, a parameter indication and management via PSCCH (and/or PSSCH) may be performed as a unit in the form of any of the above different combinations.

In various embodiments of the present disclosure, a spatial setting, TCI information, and/or QCL information may refer to each other. For example, a spatial setting, TCI information, and/or QCL information may be substituted and interpreted as information related to a beam, beam direction, spatial domain transmission, or reception filter, etc.

In various embodiments of the present disclosure, for example, having the same spatial setting information for a transmission may mean that the spatial domain transmission filter of a UE is the same for the two different transmission signals.

In various embodiments of the present disclosure, for example, having the same spatial setting information for a reception may mean that the two different reception signals are a QCL 'TypeD' relationship. And/or, for example, having the same spatial setting information for a reception may mean that the two different signals use the same spatial reception parameters.

In various embodiments of the present disclosure, for example, a (pre-)configuration may refer to a pre-configuration (based on signaling from a server or at the time of product shipment), a configuration from a base station, or a configuration via inter-UE PC5-RRC.

The various methods of this disclosure may be applied differently to different inter-UE channels (e.g., SL channels). The various methods of the present disclosure may be applied differently according to the type of information included in an inter-UE channel (e.g., SL channel).

For example, according to prior art, when SL communication is performed in FR2, a UE may perform a transmission and/or reception operation based on multiple panels and/or beam directions. Here, a spatial setting may need to be defined, which may include beam-related information or a spatial domain transmission/reception filter or the like.

Here, when an operation of establishing an inter-UE (e.g., SL) unicast link is not performed in a beam-based manner, coverage of inter-UE communication (e.g., SL communication) operation performed in FR2 may be limited. For example, in a situation where inter-UE communication (e.g., SL communication) is performed, when a transmission beam used by a transmitting UE and a reception beam used by a receiving UE are not properly (or correspondingly) aligned in the same time interval (when beam directions are not matched or not configured to cover each other), stable communication may not be performed.

According to an embodiment of the present disclosure, when a transmitting UE performs transmission of an inter-UE physical channel (e.g., PSCCH/PSSCH), the transmitting UE may provide time interval information (together) for receiving a response (e.g., PSCCH/PSSCH) thereto. For example, in the operation, an assumption for beam setting between UEs may be indicated or (pre-)configured.

According to an embodiment of the present disclosure, when transmitting a direct communication request (e.g., DCR), a UE may transmit using a plurality of beams. For example, a UE receiving the direct communication request (e.g., DCR) may determine a beam to use when transmitting a direct communication accept (e.g., DCA) based on beam-based measurement values related to the direct communication request (e.g., DCR). In this case, for example, measurement results for a plurality of beams related to the direct communication request (e.g., DCR) may be reported (together) with the direct communication accept (e.g., DCA).

According to embodiments of the present disclosure, a distance between UEs for establishing an inter-UE unicast communication (e.g., SL unicast) link may be efficiently extended. In addition, by aligning beam configurations between a transmitting UE and a receiving UE (e.g., by matching beam directions or configuring them to cover each other), beam gain may be optimized.

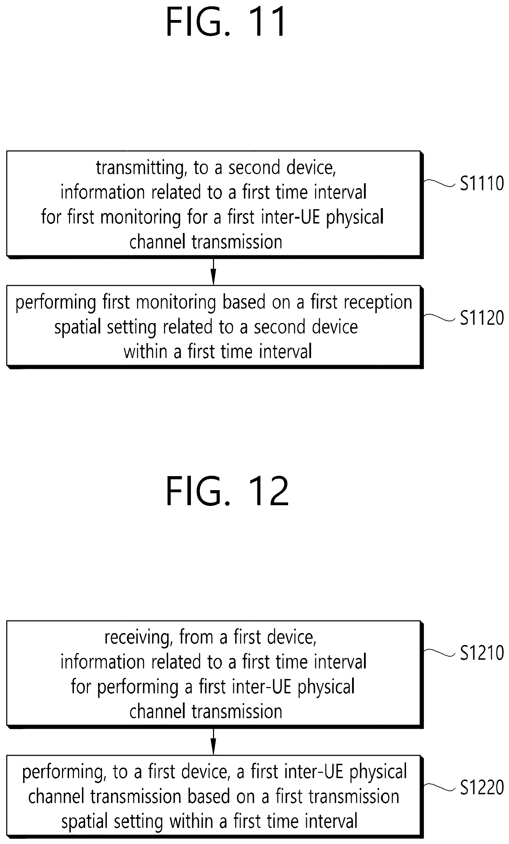

FIG. 11 shows a procedure in which a first device performs wireless communication according to an embodiment of the present disclosure. The embodiment of FIG. 11 may be applied to various device(s) described below.

Referring to FIG. 11, in step S1110, a first device may transmit, to a second device, information related to a first time interval for first monitoring for a first inter-user equipment, inter-UE, physical channel transmission. In step S1120, the first device may perform the first monitoring based on a first reception spatial setting related to the second device within the first time interval.

For example, additionally, the first device may perform, to the second device, a second inter-UE physical channel transmission based on a first transmission spatial setting.

For example, the first inter-UE physical channel transmission may be a transmission to be performed as a response to the second inter-UE physical channel transmission.

For example, the second inter-UE physical channel transmission may be a direct communication request, and the first inter-UE physical channel transmission may be a direct communication accept.

For example, the first inter-UE physical channel transmission may be a transmission of a security establishment message.

For example, the first inter-UE physical channel transmission may be transmitted by the second device based on a second transmission spatial setting corresponding to the first transmission spatial setting.

For example, the first time interval may be a time interval from a second time point, which is after a first time point at which the second inter-UE physical channel transmission is performed by a time domain offset, to a third time point which is after the first time point by a size of a window related to the first monitoring.

For example, along with the information related to the first time interval, a second inter-UE physical channel transmission may be performed.

For example, the information related to the first time interval may include at least one of a size of a window related to the first monitoring or a time domain offset value.

For example, the information related to the first time interval may be transmitted based on a first transmission spatial setting corresponding to the first reception spatial setting.

For example, the first transmission spatial setting may be a spatial setting mapped to the second device.

For example, additionally, the first device may transmit, to a third device, information related to a second time interval for a second monitoring for a second inter-UE physical channel transmission; and perform the second monitoring based on a second reception spatial setting related to the third device within the second time interval. For example, the first reception spatial setting and the second reception spatial setting may be different.

For example, the first interval may be a time interval corresponding to the first reception spatial setting.

The above-described embodiment may be applied to various devices described below. First, a processor 102 of a first device 100 may control a transceiver 106 to transmit, to a second device 200, information related to a first time interval for first monitoring for a first inter-user equipment, inter-UE, physical channel transmission. And, the processor 102 of the first device 100 may control the transceiver 106 to perform the first monitoring based on a first reception spatial setting related to the second device 200 within the first time interval.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: transmitting, to a second device, information related to a first time interval for first monitoring for a first inter-user equipment, inter-UE, physical channel transmission; and performing the first monitoring based on a first reception spatial setting related to the second device within the first time interval.

For example, additionally, the operations may further comprise: performing, to the second device, a second inter-UE physical channel transmission based on a first transmission spatial setting.

For example, the first inter-UE physical channel transmission may be a transmission to be performed as a response to the second inter-UE physical channel transmission.

For example, the second inter-UE physical channel transmission may be a direct communication request, and the first inter-UE physical channel transmission may be a direct communication accept.

For example, the first inter-UE physical channel transmission may be a transmission of a security establishment message.

For example, the first inter-UE physical channel transmission may be transmitted by the second device based on a second transmission spatial setting corresponding to the first transmission spatial setting.

For example, the first time interval may be a time interval from a second time point, which is after a first time point at which the second inter-UE physical channel transmission is performed by a time domain offset, to a third time point which is after the first time point by a size of a window related to the first monitoring.

For example, along with the information related to the first time interval, a second inter-UE physical channel transmission may be performed.

For example, the information related to the first time interval may include at least one of a size of a window related to the first monitoring or a time domain offset value.

For example, the information related to the first time interval may be transmitted based on a first transmission spatial setting corresponding to the first reception spatial setting.

For example, the first transmission spatial setting may be a spatial setting mapped to the second device.

For example, additionally, the operations may further comprise: transmitting, to a third device, information related to a second time interval for a second monitoring for a second inter-UE physical channel transmission; and performing the second monitoring based on a second reception spatial setting related to the third device within the second time interval. For example, the first reception spatial setting and the second reception spatial setting may be different.

For example, the first interval may be a time interval corresponding to the first reception spatial setting.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: transmitting, to a second UE, information related to a first time interval for first monitoring for a first inter- UE physical channel transmission; and performing the first monitoring based on a first reception spatial setting related to the second UE within the first time interval.

According to an embodiment of the present disclosure, a non-transitory computer-readable storage medium storing instructions may be proposed. For example, the instructions, based on being executed, may cause a first device to: transmit, to a second device, information related to a first time interval for first monitoring for a first inter-user equipment, inter-UE, physical channel transmission; and perform the first monitoring based on a first reception spatial setting related to the second device within the first time interval.

FIG. 12 may show a procedure in which a second device performs wireless communication according to an embodiment of the present disclosure. The embodiment of FIG. 12 may be combined with various embodiments of the present disclosure.

Referring to FIG. 12, in step S1210, a second device may receive, from a first device, information related to a first time interval for performing a first inter-user equipment, inter-UE, physical channel transmission. In step S1220, the second device may perform, to the first device, the first inter-UE physical channel transmission based on a first transmission spatial setting within the first time interval. For example, a monitoring for the first inter-UE physical channel transmission may be performed based on a first reception spatial setting related to the second device within the first time interval.

For example, additionally, the second device may receive, from the first device, a second inter-UE physical channel transmission. For example, the first inter-UE physical channel transmission may be performed as a response to the second inter-UE physical channel transmission, the second inter-UE physical channel transmission may be a direct communication request, and the first inter-UE physical channel transmission may be a direct communication accept.

The above-described embodiment may be applied to various device(s) described below. First, a processor 202 of a second device 200 may control a transceiver 206 to receive, from a first device 100, information related to a first time interval for performing a first inter-user equipment, inter-UE, physical channel transmission. And, the processor 202 of the second device 200 may control the transceiver 206 to perform, to the first device 100, the first inter-UE physical channel transmission based on a first transmission spatial setting within the first time interval. For example, a monitoring for the first inter-UE physical channel transmission may be performed based on a first reception spatial setting related to the second device 200 within the first time interval.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, information related to a first time interval for performing a first inter-user equipment, inter-UE, physical channel transmission; and performing, to the first device, the first inter-UE physical channel transmission based on a first transmission spatial setting within the first time interval, wherein a monitoring for the first inter-UE physical channel transmission may be performed based on a first reception spatial setting related to the second device within the first time interval.

For example, the operations may further comprise: receiving, from the first device, a second inter-UE physical channel transmission. For example, the first inter-UE physical channel transmission may be performed as a response to the second inter-UE physical channel transmission, the second inter-UE physical channel transmission may be a direct communication request, and wherein the first inter-UE physical channel transmission may be a direct communication accept.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present dis closure described in this document may be applied to, without being limited to, a variety of fields requiring wireless communi cation/connection (e.g., 5G) between devices.

Hereinafter, a description will be given in more detail with reference to the drawings. In the following drawings/des cription, the same reference symbols may denote the same or corresponding hardware blocks, software blocks, or functional b locks unless described otherwise.

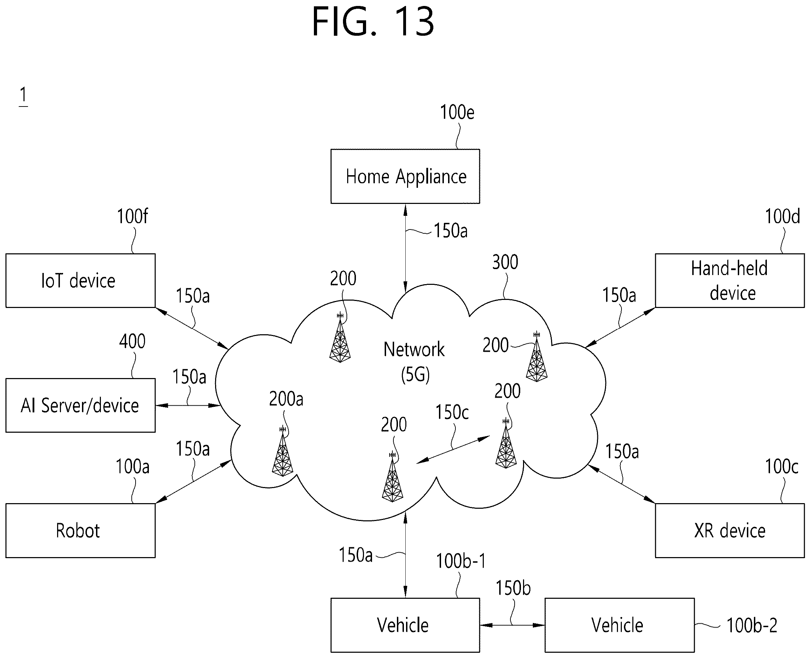

FIG. 13 shows a communication system 1, based on an embodiment of the present disclosure. The embodiment of F IG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing com munication using Radio Access Technology (RAT) (e.g., 5G New RAT (NR)) or Long-Term Evolution (LTE)) and may be re ferred to as communication/radio/5G devices. The wireless devices may include, without being limited to, a robot 100a, vehic les 100b-1 and 100b-2, an eXtended Reality (XR) device 100c, a hand-held device 100d, a home appliance 100e, an Internet o f Things (IoT) device 100f, and an Artificial Intelligence (AI) device/server 400. For example, the vehicles may include a veh icle having a wireless communication function, an autonomous vehicle, and a vehicle capable of performing communication b etween vehicles. Herein, the vehicles may include an Unmanned Aerial Vehicle (UAV) (e.g., a drone). The XR device may in clude an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a w earable device, a home appliance device, a digital signage, a vehicle, a robot, etc. The hand-held device may include a smartp hone, a smartpad, a wearable device (e.g., a smartwatch or a smartglasses), and a computer (e.g., a notebook). The home appli ance may include a TV, a refrigerator, and a washing machine. The IoT device may include a sensor and a smartmeter. For ex ample, the BSs and the network may be implemented as wireless devices and a specific wireless device 200a may operate as a BS/network node with respect to other wireless devices.

Here, wireless communication technology implemented in wireless devices 100a to 100f of the present disclosure m ay include Narrowband Internet of Things for low-power communication in addition to LTE, NR, and 6G. In this case, for ex ample, NB-IoT technology may be an example of Low Power Wide Area Network (LPWAN) technology and may be implem ented as standards such as LTE Cat NB1, and/or LTE Cat NB2, and is not limited to the name described above. Additionally o r alternatively, the wireless communication technology implemented in the wireless devices 100a to 100f of the present disclo sure may perform communication based on LTE-M technology. In this case, as an example, the LTE-M technology may be a n example of the LPWAN and may be called by various names including enhanced Machine Type Communication (eMTC), a nd the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Co mmunication, and/or 7) LTE M, and is not limited to the name described above. Additionally or alternatively, the wireless co mmunication technology implemented in the wireless devices 100a to 100f of the present disclosure may include at least one of Bluetooth, Low Power Wide Area Network (LPWAN), and ZigBee considering the low-power communication, and is not 1 imited to the name described above. As an example, the ZigBee technology may generate personal area networks (PAN) relat ed to small/low-power digital communication based on various standards including IEEE 802.15.4, and the like, and may be c alled by various names.

The wireless devices 100a to 100f may be connected to the network 300 via the BSs 200. An AI technology may be applied to the wireless devices 100a to 100f and the wireless devices 100a to 100f may be connected to the AI server 400 via t he network 300. The network 300 may be configured using a 3G network, a 4G (e.g., LTE) network, or a 5G (e.g., NR) netwo rk. Although the wireless devices 100a to 100f may communicate with each other through the BSs 200/network 300, the wirel ess devices 100a to 100f may perform direct communication (e.g., sidelink communication) with each other without passing t hrough the BSs/network. For example, the vehicles 100b-1 and 100b-2 may perform direct communication (e.g. Vehicle-to-V ehicle (V2V)/Vehicle-to-everything (V2X) communication). The IoT device (e.g., a sensor) may perform direct communicati on with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs ( e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices ma y transmit/receive radio signals to/from each other through the wireless communication/connections 150a and 150b. For exam ple, the wireless communication/connections 150a and 150b may transmit/receive signals through various physical channels. To this end, at least a part of various configuration information configuring processes, various signal processing processes (e. g., channel encoding/decoding, modulation/demodulation, and resource mapping/demapping), and resource allocating process es, for transmitting/receiving radio signals, may be performed based on the various proposals of the present disclosure.

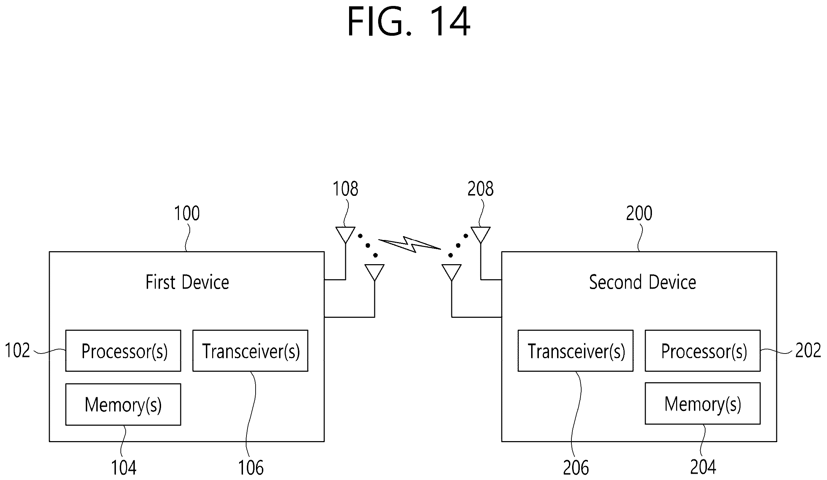

FIG. 14 shows wireless devices, based on an embodiment of the present disclosure. The embodiment of FIG. 14 ma y be combined with various embodiments of the present disclosure.

Referring to FIG. 14, a first wireless device 100 and a second wireless device 200 may transmit radio signals throug h a variety of RATs (e.g., LTE and NR). Herein, {the first wireless device 100 and the second wireless device 200} may corre spond to {the wireless device 100x and the BS 200} and/or {the wireless device 100x and the wireless device 100x} of FIG. 1 3.

The first wireless device 100 may include one or more processors 102 and one or more memories 104 and additiona lly further include one or more transceivers 106 and/or one or more antennas 108. The processor(s) 102 may control the mem ory(s) 104 and/or the transceiver(s) 106 and may be configured to implement the descriptions, functions, procedures, proposal s, methods, and/or operational flowcharts disclosed in this document. For example, the processor(s) 102 may process informat ion within the memory(s) 104 to generate first information/signals and then transmit radio signals including the first informati on/signals through the transceiver(s) 106. The processor(s) 102 may receive radio signals including second information/signal s through the transceiver 106 and then store information obtained by processing the second information/signals in the memory (s) 104. The memory(s) 104 may be connected to the processor(s) 102 and may store a variety of information related to operat ions of the processor(s) 102. For example, the memory(s) 104 may store software code including commands for performing a part or the entirety of processes controlled by the processor(s) 102 or for performing the descriptions, functions, procedures, p roposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Ea ch of the transceiver(s) 106 may include a transmitter and/or a receiver. The transceiver(s) 106 may be interchangeably used w ith Radio Frequency (RF) unit(s). In the present disclosure, the wireless device may represent a communication modem/circui t/chip.

The second wireless device 200 may include one or more processors 202 and one or more memories 204 and additio nally further include one or more transceivers 206 and/or one or more antennas 208. The processor(s) 202 may control the me mory(s) 204 and/or the transceiver(s) 206 and may be configured to implement the descriptions, functions, procedures, propos als, methods, and/or operational flowcharts disclosed in this document. For example, the processor(s) 202 may process inform ation within the memory(s) 204 to generate third information/signals and then transmit radio signals including the third inform ation/signals through the transceiver(s) 206. The processor(s) 202 may receive radio signals including fourth information/sign als through the transceiver(s) 106 and then store information obtained by processing the fourth information/signals in the mem ory(s) 204. The memory(s) 204 may be connected to the processor(s) 202 and may store a variety of information related to op erations of the processor(s) 202. For example, the memory(s) 204 may store software code including commands for performin g a part or the entirety of processes controlled by the processor(s) 202 or for performing the descriptions, functions, procedure s, proposals, methods, and/or operational flowcharts disclosed in this document. Herein, the processor(s) 202 and the memory (s) 204 may be a part of a communication modem/circuit/chip designed to implement RAT (e.g., LTE or NR). The transceive r(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably us ed with RF unit(s). In the present disclosure, the wireless device may represent a communication modem/circuit/chip.

Hereinafter, hardware elements of the wireless devices 100 and 200 will be described more specifically. One or mor e protocol layers may be implemented by, without being limited to, one or more processors 102 and 202. For example, the on e or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or o ne or more Service Data Unit (SDUs) according to the descriptions, functions, procedures, proposals, methods, and/or operati onal flowcharts disclosed in this document. The one or more processors 102 and 202 may generate messages, control informa tion, data, or information according to the descriptions, functions, procedures, proposals, methods, and/or operational flowcha rts disclosed in this document. The one or more processors 102 and 202 may generate signals (e.g., baseband signals) includin g PDUs, SDUs, messages, control information, data, or information according to the descriptions, functions, procedures, prop osals, methods, and/or operational flowcharts disclosed in this document and provide the generated signals to the one or more transceivers 106 and 206. The one or more processors 102 and 202 may receive the signals (e.g., baseband signals) from the o ne or more transceivers 106 and 206 and acquire the PDUs, SDUs, messages, control information, data, or information accord ing to the descriptions, functions, procedures, proposals, methods, and/or operational flowcharts disclosed in this document.

The one or more processors 102 and 202 may be referred to as controllers, microcontrollers, microprocessors, or mi crocomputers. The one or more processors 102 and 202 may be implemented by hardware, firmware, software, or a combinati on thereof. As an example, one or more Application Specific Integrated Circuits (ASICs), one or more Digital Signal Process ors (DSPs), one or more Digital Signal Processing Devices (DSPDs), one or more Programmable Logic Devices (PLDs), or o ne or more Field Programmable Gate Arrays (FPGAs) may be included in the one or more processors 102 and 202. The descr iptions, functions, procedures, proposals, methods, and/or operational flowcharts disclosed in this document may be impleme nted using firmware or software and the firmware or software may be configured to include the modules, procedures, or funct ions. Firmware or software configured to perform the descriptions, functions, procedures, proposals, methods, and/or operatio nal flowcharts disclosed in this document may be included in the one or more processors 102 and 202 or stored in the one or more memories 104 and 204 so as to be driven by the one or more processors 102 and 202. The descriptions, functions, proce dures, proposals, methods, and/or operational flowcharts disclosed in this document may be implemented using firmware or s oftware in the form of code, commands, and/or a set of commands.

The one or more memories 104 and 204 may be connected to the one or more processors 102 and 202 and store vari ous types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable st orage media, and/or combinations thereof. The one or more memories 104 and 204 may be located at the interior and/or exteri or of the one or more processors 102 and 202. The one or more memories 104 and 204 may be connected to the one or more p rocessors 102 and 202 through various technologies such as wired or wireless connection.

The one or more transceivers 106 and 206 may transmit user data, control information, and/or radio signals/channel s, mentioned in the methods and/or operational flowcharts of this document, to one or more other devices. The one or more tr ansceivers 106 and 206 may receive user data, control information, and/or radio signals/channels, mentioned in the descriptio ns, functions, procedures, proposals, methods, and/or operational flowcharts disclosed in this document, from one or more oth er devices. For example, the one or more transceivers 106 and 206 may be connected to the one or more processors 102 and 2 02 and transmit and receive radio signals. For example, the one or more processors 102 and 202 may perform control so that t he one or more transceivers 106 and 206 may transmit user data, control information, or radio signals to one or more other de vices. The one or more processors 102 and 202 may perform control so that the one or more transceivers 106 and 206 may rec eive user data, control information, or radio signals from one or more other devices. The one or more transceivers 106 and 20 6 may be connected to the one or more antennas 108 and 208 and the one or more transceivers 106 and 206 may be configure d to transmit and receive user data, control information, and/or radio signals/channels, mentioned in the descriptions, function s, procedures, proposals, methods, and/or operational flowcharts disclosed in this document, through the one or more antenna s 108 and 208. In this document, the one or more antennas may be a plurality of physical antennas or a plurality of logical ant ennas (e.g., antenna ports). The one or more transceivers 106 and 206 may convert received radio signals/channels etc. from R F band signals into baseband signals in order to process received user data, control information, radio signals/channels, etc. us ing the one or more processors 102 and 202. The one or more transceivers 106 and 206 may convert the user data, control inf ormation, radio signals/channels, etc. processed using the one or more processors 102 and 202 from the base band signals into the RF band signals. To this end, the one or more transceivers 106 and 206 may include (analog) oscillators and/or filters.

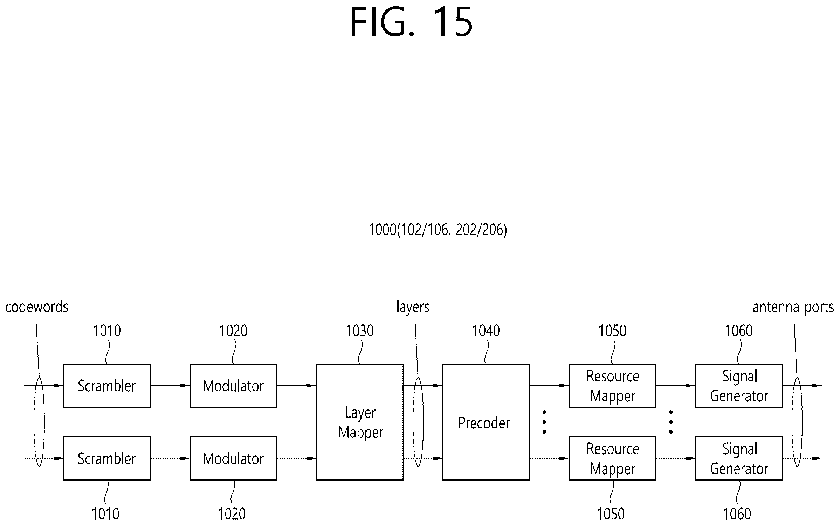

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapp er 1030, a precoder 1040, resource mappers 1050, and signal generators 1060. An operation/function of FIG. 15 may be perfo rmed, without being limited to, the processors 102 and 202 and/or the transceivers 106 and 206 of FIG. 14. Hardware element s of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 1 06 and 206 of FIG. 14.

Codewords may be converted into radio signals via the signal processing circuit 1000 of FIG. 15. Herein, the codew ords are encoded bit sequences of information blocks. The information blocks may include transport blocks (e.g., a UL-SCH t ransport block, a DL-SCH transport block). The radio signals may be transmitted through various physical channels (e.g., a P USCH and a PDSCH).

Specifically, the codewords may be converted into scrambled bit sequences by the scramblers 1010. Scramble seque nces used for scrambling may be generated based on an initialization value, and the initialization value may include ID inform ation of a wireless device. The scrambled bit sequences may be modulated to modulation symbol sequences by the modulator s 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more tran sport layers by the layer mapper 1030. Modulation symbols of each transport layer may be mapped (precoded) to correspondi ng antenna port(s) by the precoder 1040. Outputs z of the precoder 1040 may be obtained by multiplying outputs y of the laye r mapper 1030 by an N*M precoding matrix W. Herein, N is the number of antenna ports and M is the number of transport la yers. The precoder 1040 may perform precoding after performing transform precoding (e.g., DFT) for complex modulation sy mbols. Alternatively, the precoder 1040 may perform precoding without performing transform precoding.

The resource mappers 1050 may map modulation symbols of each antenna port to time-frequency resources. The ti me-frequency resources may include a plurality of symbols (e.g., a CP-OFDMA symbols and DFT-s-OFDMA symbols) in th e time domain and a plurality of subcarriers in the frequency domain. The signal generators 1060 may generate radio signals f rom the mapped modulation symbols and the generated radio signals may be transmitted to other devices through each antenn a. For this purpose, the signal generators 1060 may include Inverse Fast Fourier Transform (IFFT) modules, Cyclic Prefix (C P) inserters, Digital-to-Analog Converters (DACs), and frequency up-converters.

Signal processing procedures for a signal received in the wireless device may be configured in a reverse manner of t he signal processing procedures 1010 to 1060 of FIG. 15. For example, the wireless devices (e.g., 100 and 200 of FIG. 14) ma y receive radio signals from the exterior through the antenna ports/transceivers. The received radio signals may be converted i nto baseband signals through signal restorers. To this end, the signal restorers may include frequency downlink converters, A nalog-to-Digital Converters (ADCs), CP remover, and Fast Fourier Transform (FFT) modules. Next, the baseband signals ma y be restored to codewords through a resource demapping procedure, a postcoding procedure, a demodulation processor, and a descrambling procedure. The codewords may be restored to original information blocks through decoding. Therefore, a sign al processing circuit (not illustrated) for a reception signal may include signal restorers, resource demappers, a postcoder, dem odulators, descramblers, and decoders.

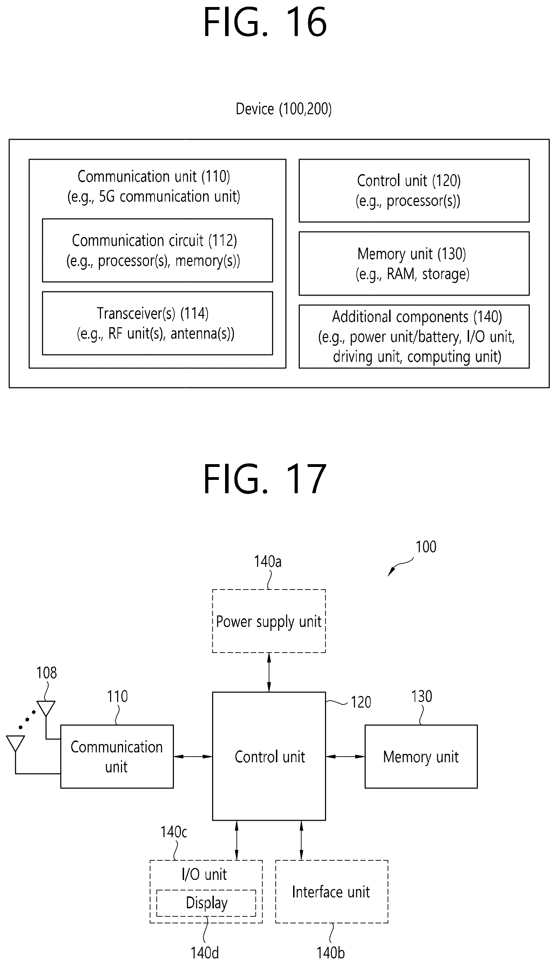

FIG. 16 shows another example of a wireless device, based on an embodiment of the present disclosure. The wireles s device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless d evices 100 and 200 may include a communication unit 110, a control unit 120, a memory unit 130, and additional components 140. The communication unit may include a communication circuit 112 and transceiver(s) 114. For example, the communicat ion circuit 112 may include the one or more processors 102 and 202 and/or the one or more memories 104 and 204 of FIG. 14. For example, the transceiver(s) 114 may include the one or more transceivers 106 and 206 and/or the one or more antennas 1 08 and 208 of FIG. 14. The control unit 120 is electrically connected to the communication unit 110, the memory 130, and the additional components 140 and controls overall operation of the wireless devices. For example, the control unit 120 may cont rol an electric/mechanical operation of the wireless device based on programs/code/commands/information stored in the mem ory unit 130. The control unit 120 may transmit the information stored in the memory unit 130 to the exterior (e.g., other com munication devices) via the communication unit 110 through a wireless/wired interface or store, in the memory unit 130, info rmation received through the wireless/wired interface from the exterior (e.g., other communication devices) via the communic ation unit 110.

The additional components 140 may be variously configured according to types of wireless devices. For example, th e additional components 140 may include at least one of a power unit/battery, input/output (I/O) unit, a driving unit, and a co mputing unit. The wireless device may be implemented in the form of, without being limited to, the robot (100a of FIG. 13), t he vehicles (100b-1 and 100b-2 of FIG. 13), the XR device (100c of FIG. 13), the hand-held device (100d of FIG. 13), the ho me appliance (100e of FIG. 13), the IoT device (100f of FIG. 13), a digital broadcast terminal, a hologram device, a public saf ety device, an MTC device, a medicine device, a fintech device (or a finance device), a security device, a climate/environmen t device, the AI server/device (400 of FIG. 13), the BSs (200 of FIG. 13), a network node, etc. The wireless device may be us ed in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected t hrough the communication unit 110. For example, in each of the wireless devices 100 and 200, the control unit 120 and the co mmunication unit 110 may be connected by wire and the control unit 120 and first units (e.g., 130 and 140) may be wirelessly connected through the communication unit 110. Each element, component, unit/portion, and/or module within the wireless de vices 100 and 200 may further include one or more elements. For example, the control unit 120 may be configured by a set of one or more processors. As an example, the control unit 120 may be configured by a set of a communication control processo r, an application processor, an Electronic Control Unit (ECU), a graphical processing unit, and a memory control processor. A s another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may in clude a smartphone, a smartpad, a wearable device (e.g., a smartwatch or a smartglasses), or a portable computer (e.g., a noteb ook). The hand-held device may be referred to as a mobile station (MS), a user terminal (UT), a Mobile Subscriber Station (M SS), a Subscriber Station (SS), an Advanced Mobile Station (AMS), or a Wireless terminal (WT). The embodiment of FIG. 1 7 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 ma y be configured as a part of the communication unit 110. Blocks 110 to 130/140a to140c correspond to the blocks 110 to 130/ 140 of FIG. 16, respectively.

The communication unit 110 may transmit and receive signals (e.g., data and control signals) to and from other wire less devices or BSs. The control unit 120 may perform various operations by controlling constituent elements of the hand-hel d device 100. The control unit 120 may include an Application Processor (AP). The memory unit 130 may store data/paramet ers/programs/code/commands needed to drive the hand-held device 100. The memory unit 130 may store input/output data/in formation. The power supply unit 140a may supply power to the hand-held device 100 and include a wired/wireless charging circuit, a battery, etc. The interface unit 140b may support connection of the hand-held device 100 to other external devices. T he interface unit 140b may include various ports (e.g., an audio I/O port and a video I/O port) for connection with external de vices. The I/O unit 140c may input or output video information/signals, audio information/signals, data, and/or information in put by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, te xt, voice, images, or video) input by a user and the acquired information/signals may be stored in the memory unit 130. The c ommunication unit 110 may convert the information/signals stored in the memory into radio signals and transmit the converte d radio signals to other wireless devices directly or to a BS. The communication unit 110 may receive radio signals from othe r wireless devices or the BS and then restore the received radio signals into original information/signals. The restored informa tion/signals may be stored in the memory unit 130 and may be output as various types (e.g., text, voice, images, video, or hapt ic) through the I/O unit 140c.

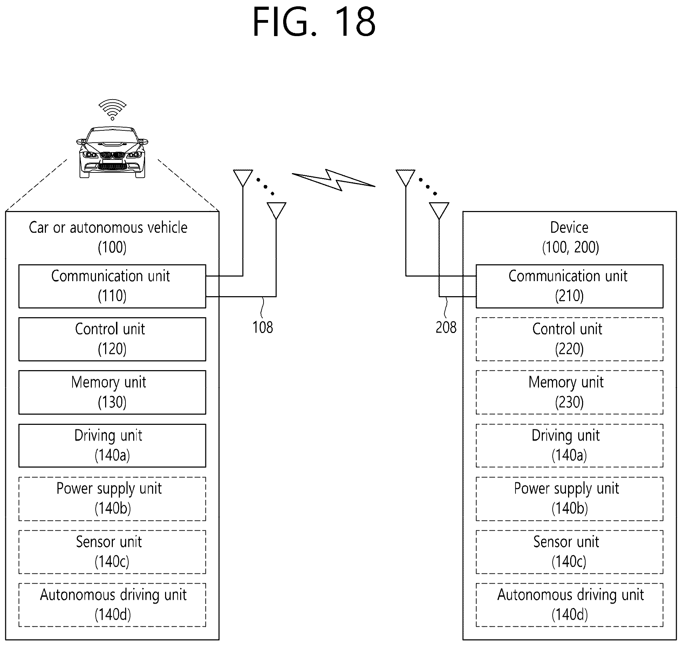

FIG. 18 shows a vehicle or an autonomous vehicle, based on an embodiment of the present disclosure. The vehicle o r autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 1 10, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspo nd to the blocks 110/130/140 of FIG. 16, respectively.

The communication unit 110 may transmit and receive signals (e.g., data and control signals) to and from external d evices such as other vehicles, BSs (e.g., gNBs and road side units), and servers. The control unit 120 may perform various op erations by controlling elements of the vehicle or the autonomous vehicle 100. The control unit 120 may include an Electronic Control Unit (ECU). The driving unit 140a may cause the vehicle or the autonomous vehicle 100 to drive on a road. The drivi ng unit 140a may include an engine, a motor, a powertrain, a wheel, a brake, a steering device, etc. The power supply unit 140 b may supply power to the vehicle or the autonomous vehicle 100 and include a wired/wireless charging circuit, a battery, etc. The sensor unit 140c may acquire a vehicle state, ambient environment information, user information, etc. The sensor unit 14 0c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire s ensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is drivin g, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external serv er. The autonomous driving unit 140d may generate an autonomous driving path and a driving plan from the obtained data. T he control unit 120 may control the driving unit 140a such that the vehicle or the autonomous vehicle 100 may move along th e autonomous driving path according to the driving plan (e.g., speed/direction control). In the middle of autonomous driving, t he communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update t he autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from ve hicles or autonomous vehicles and provide the predicted traffic information data to the vehicles or the autonomous vehicles.

Claims in the present description can be combined in a various way. For instance, technical features in method claim s of the present description can be combined to be implemented or performed in an apparatus, and technical features in appara tus claims can be combined to be implemented or performed in a method. Further, technical features in method claim(s) and a pparatus claim(s) can be combined to be implemented or performed in an apparatus. Further, technical features in method clai m(s) and apparatus claim(s) can be combined to be implemented or performed in a method.

## Claims

1. A method for performing, by a first device, wireless communication, the method comprising:
transmitting, to a second device, information related to a first time interval for first monitoring for a first inter-user equipment, inter-UE, physical channel transmission; and
performing the first monitoring based on a first reception spatial setting related to the second device within the first time interval.

2. The method of claim 1, further comprising:
performing, to the second device, a second inter-UE physical channel transmission based on a first transmission spatial setting.

3. The method of claim 2, wherein the first inter-UE physical channel transmission is a transmission to be performed as a response to the second inter-UE physical channel transmission.

4. The method of claim 3, wherein the second inter-UE physical channel transmission is a direct communication request, and
wherein the first inter-UE physical channel transmission is a direct communication accept.

5. The method of claim 3, wherein the first inter-UE physical channel transmission is a transmission of a security establishment message.

6. The method of claim 3, wherein the first inter-UE physical channel transmission is transmitted by the second device based on a second transmission spatial setting corresponding to the first transmission spatial setting.

7. The method of claim 2, wherein the first time interval is a time interval from a second time point, which is after a first time point at which the second inter-UE physical channel transmission is performed by a time domain offset, to a third time point which is after the first time point by a size of a window related to the first monitoring.

8. The method of claim 1, wherein along with the information related to the first time interval, a second inter-UE physical channel transmission is performed.

9. The method of claim 1, wherein the information related to the first time interval includes at least one of a size of a window related to the first monitoring or a time domain offset value.

10. The method of claim 1, wherein the information related to the first time interval is transmitted based on a first transmission spatial setting corresponding to the first reception spatial setting.

11. The method of claim 1, wherein the first transmission spatial setting is a spatial setting mapped to the second device.

12. The method of claim 1, further comprising:
transmitting, to a third device, information related to a second time interval for a second monitoring for a second inter-UE physical channel transmission; and
performing the second monitoring based on a second reception spatial setting related to the third device within the second time interval,
wherein the first reception spatial setting and the second reception spatial setting are different.

13. The method of claim 1, wherein the first interval is a time interval corresponding to the first reception spatial setting.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
transmitting, to a second device, information related to a first time interval for first monitoring for a first inter-user equipment, inter-UE, physical channel transmission; and
performing the first monitoring based on a first reception spatial setting related to the second device within the first time interval.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
transmitting, to a second UE, information related to a first time interval for first monitoring for a first inter- UE physical channel transmission; and
performing the first monitoring based on a first reception spatial setting related to the second UE within the first time interval.

16. A non-transitory computer-readable storage medium storing instructions that, based on being executed, cause a first device to:
transmit, to a second device, information related to a first time interval for first monitoring for a first inter-user equipment, inter-UE, physical channel transmission; and
perform the first monitoring based on a first reception spatial setting related to the second device within the first time interval.

17. A method for performing, by a second device, wireless communication, the method comprising:
receiving, from a first device, information related to a first time interval for performing a first inter-user equipment, inter-UE, physical channel transmission; and
performing, to the first device, the first inter-UE physical channel transmission based on a first transmission spatial setting within the first time interval,
wherein a monitoring for the first inter-UE physical channel transmission is performed based on a first reception spatial setting related to the second device within the first time interval.

18. The method of claim 17, further comprising:
receiving, from the first device, a second inter-UE physical channel transmission,
wherein the first inter-UE physical channel transmission is performed as a response to the second inter-UE physical channel transmission,
wherein the second inter-UE physical channel transmission is a direct communication request, and
wherein the first inter-UE physical channel transmission is a direct communication accept.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
receiving, from a first device, information related to a first time interval for performing a first inter-user equipment, inter-UE, physical channel transmission; and
performing, to the first device, the first inter-UE physical channel transmission based on a first transmission spatial setting within the first time interval,
wherein a monitoring for the first inter-UE physical channel transmission is performed based on a first reception spatial setting related to the second device within the first time interval.

20. The second device of claim 19, the operations further comprise:
receiving, from the first device, a second inter-UE physical channel transmission,
wherein the first inter-UE physical channel transmission is performed as a response to the second inter-UE physical channel transmission,
wherein the second inter-UE physical channel transmission is a direct communication request, and
wherein the first inter-UE physical channel transmission is a direct communication accept.
